# EUROPÄISCHE PATENTSCHRIFT

(11) **EP 4 595 365 B1**
(45) Veröffentlichungstag und Bekanntmachung des Hinweises auf die Patenterteilung: **01.07.2026**
(21) Anmeldenummer: 23772281.4
(22) Anmeldetag: 21.09.2023
(51) Int. Cl.: H04L 25/49

(54) **EFFIZIENT ÜBERTRAGBARE BITFOLGE MIT EINGESCHRÄNKTER DISPARITÄT**
EFFICIENTLY TRANSFERABLE BIT SEQUENCE WITH REDUCED DISPARITY
SÉQUENCE BINAIRE POUVANT ÊTRE TRANSMISE EFFICACEMENT À DISPARITÉ LIMITÉE

(30) Priorität: 27.09.2022 EP 22198217
(43) Veröffentlichungstag der Anmeldung: 06.08.2025
(73) Patentinhaber: INOVA Semiconductors GmbH, 81379 München (DE)
(72) Erfinder: NEUMANN, Roland, 83646 Bad Tölz (DE); KLUGE, Fabian, 94366 Perasdorf (DE)
(74) Vertreter: Reich, Jochen
(86) Internationale Anmeldenummer: PCT/EP2023/076110
(87) Internationale Veröffentlichungsnummer: WO 2024/068435

(56) Entgegenhaltungen:
- US-B1- 6 691 275
- BOYE JEFFREY ET AL: "11b/14b Encoding - A Fault Tolerant, DC-Balanced Line Code for AC-Coupled Channel Link Transceivers", 2019 IEEE AEROSPACE CONFERENCE, IEEE, 2 March 2019 (2019-03-02), pages 1 - 11, XP033561728, DOI: 10.1109/AERO.2019.8741859

## Beschreibung

Die vorliegende Erfindung ist auf ein Verfahren zum Erzeugen einer effizient übertragbaren Bitfolge mit einer eingeschränkten Disparität und einer eingeschränkten Lauflänge gerichtet. Das vorgeschlagene Verfahren erlaubt es, dass Daten über einen Übertragungskanal besonders effizient übertragen werden können. Eine optimierte Disparität stellt ein Qualitätsmerkmal für die Übertragbarkeit von Daten dar. Eine nachteilige Disparität kann dazu führen, dass Daten über einen Datenkanal nicht ordnungsgemäß übertragen werden können, da diese vom Empfänger nicht ordnungsgemäß interpretiert werden können. Ein weiteres Qualitätsmerkmal ist die Dateneffizienz bezüglich des Verhältnisses von übertragenen Nutzdaten und einer weiteren Datenmenge, welche sich nicht direkt auf die Nutzdaten inhaltlich bezieht. Hierzu gehören sogenannte Kopfdaten. Die vorgeschlagene Erfindung erlaubt es, Datenströme zu erzeugen, welche besonders effizient ausgelesen werden können und zudem auch bezüglich der Überhangdaten sehr effizient sind. So wird der sogenannte Overhead der Nutzdaten minimiert, was wiederum ein besonders effizientes Verfahren schafft. Auch die empfängerseitige eindeutige Interpretierbarkeit sorgt dafür, dass Daten nicht wiederholt übertragen werden müssen, sondern vielmehr können diese mit hoher Fehlersicherheit empfängerseitig ausgelesen werden. Darüber hinaus ist das vorgeschlagene Verfahren besonders effizient, da eine Überführung von Datensegmenten in Teilsymbole beziehungsweise in Symbole die aus Teilsymbolen aufgebaut sind, parallel ausgeführt werden kann und zudem sind bei dieser parallelen Ausführung lediglich technisch einfach herzustellende Einheiten notwendig. Somit bezieht sich vorliegend der Effizienzgewinn auch auf die zu verwendende Hardware bzw. Laufzeit. Die Erfindung ist ferner gerichtet auf eine entsprechend eingerichtete Systemanordnung sowie auf ein Computerprogrammprodukt und ein speicherlesbares Medium mit Steuerbefehlen, welche das Verfahren ausführen.

Boye Jeffrey et al: "11b/14b Encoding - A Fault Tolerant, DC-Balanced Line Code for AC-Coupled Channel Link Transceivers", 2019 IEEE Aerospace Conference, IEEE, 2. März 2019, zeigt ein fehlertolerantes, DC-symmetrisches Leitungskodierungsschema zur Verwendung mit AC-gekoppelten Channel-Link-Transceivern, die über eine 7-Bit-Rahmenausrichtung im Gegensatz zu einer typischeren 8-Bit-Ausrichtung verfügen.

US 6,691,275 B1 zeigt ein Verfahren und eine Vorrichtung zum Kodieren von Eingabedaten mit einer schnelleren Rate. Diese ermöglichen Fehlererkennung, Taktwiederherstellung und Reduzierung von Spektralkomponenten in der Nähe von Gleichstrom und sind in der Lage, Daten zu kodieren und gleichzeitig Fehlererkennungsinformationen einzubetten.

EP 3323219 A1 zeigt ein Verfahren, welches es ermöglicht einen analogen Datenstrom über eine Datenleitung besonders fehlersicher auszulesen. Hierbei wird unter anderem die Amplitude des Signals überwacht und besonders bevorzugt an derjenigen Stelle das Signal gemessen, an der die Amplitude maximal ist. Hierdurch wird ein analoger Datenstrom in einen digitalen Datensatz überführt und durch die maximale Amplitude wird sichergestellt, dass der Schwellwert zwischen 0 und 1 auf der Leitung sicher unter- bzw. überschritten wird.

Aus dem Stand der Technik sind unterschiedliche Kodierungsverfahren bzw. Datenübertragungsverfahren bekannt, welche sich jedoch allesamt auf Anwendungsszenarien beziehen, welche in einem Automobil nur nachteilig Einsatz finden können. So geht der Stand der Technik oftmals davon aus, dass eine hohe Rechenleistung verfügbar ist und keine hohen Echtzeitanforderungen gestellt werden. Darüber hinaus geht der Stand der Technik oftmals davon aus, dass ein Gewicht bzw. eine Ausfallsicherheit der zu verwendenden Komponenten eine untergeordnete Rolle spielt. Oftmals bezieht sich der Stand der Technik auf herkömmliche Computernetzwerke, bei denen die Ausfallsicherheit bzw. ein geringer technischer Aufwand weniger von Bedeutung sind.

Ausgehend von diesem Stand der Technik besteht ein Bedarf ein Verfahren bzw. eine Systemanordnung zu schaffen, welche es ermöglicht, dass aufgrund der Sicherheitsanforderungen im Automobil Daten möglichst schnell verarbeitet werden können und zudem ein geringer technischer Aufwand besteht und die Fehlerrate bei der Übertragung minimiert ist, da eine erneute Übertragung bei Fehlererkennung nicht möglich ist. Der geringe technische Aufwand soll darin bestehen, dass möglichst einfache Komponenten zu verbauen sind, welche wenig Gewicht aufweisen und zudem in großer Stückzahl effizient herstellbar sind. Bekannte Verfahren und Systemanordnungen aus der Computernetzwerktechnik sind hier typischerweise nicht verwendbar, da bei einem Stand- PC bzw. Server Gewichtseinsparungen und Echtzeitlaufverhalten nicht ausschlaggebend sind. Generell spielt zwar bei Rechneranordnungen die abzutransportierende Wärme eine Herausforderung dar, die Energieeffizienz in einem Automobil ist jedoch von nochmals übergeordneter Rolle, da beispielsweise in der Elektromobilität der Stromverbrauch sogar auf die Reichweite des Automobils Einfluss hat.

Weiterer Stand der Technik bezieht sich auf die Übertragung von Daten in einem seriellen Datenstrom. Hierzu sieht der Stand der Technik beispielsweise vor, dass mit den Nutzdaten umfangreiche Beschreibungsdaten mitgesendet werden, welche angeben, wo sich die Nutzdaten befinden bzw. wie die zu interpretieren sind. Darüber hinaus ist es im Stand der Technik bekannt, einzelne Datenpakete zu verwerfen, wenn diese nicht ordnungsgemäß übertragen werden. Darüber hinaus ist es im Stand der Technik bekannt Datenpakete erneut zu versenden, falls diese nicht rechtzeitig bzw. in einem unerwarteten Format bei einem Sender eintreffen.

Bei der seriellen Übertragung von Daten ist es notwendig die Anzahl von Einsen und Nullen im seriellen Datenstrom möglichst gleich zu haben. Dies nennt man die Disparität. Eine Disparität von Null im großen Mittel und aber auch über einen kleinen Zeitraum ist wünschenswert, damit es nicht zu einem sogenannten Baseline Drift bei der Übertragung kommt. Der Baseline Drift (Gleichspannungsschwankung) des seriellen Signals führt zu Bitfehlern. Im Extremfall ist eine Übertragung nicht möglich.

Um die seriellen Bits im seriellen Datenstrom, sicher auf der Empfangsseite zurückgewinnen zu können, ohne die Notwendigkeit einen Takt mit zu übertragen, ist eine Mindestanzahl von 0->1 beziehungsweise 1->0 Übergängen notwendig. Damit wird der Takt zur Rückgewinnung der seriellen Daten lokal am Empfänger aus dem seriellen Datenstrom erzeugt. Die sogenannte Lauflänge (Run Length) gibt an, wieviel gleiche Bits (Einsen oder Nullen) hintereinander, ohne Wechsel vorkommen können. Eine kleine Lauflänge ist immer wünschenswert, da große Lauflängen eine sichere Rückgewinnung des Taktes aus dem seriellen Datenstrom nicht mehr ermöglichen.

Die Aufgabe des Linecodes (in diesem Fall ein Block Code) ist es nun aus beliebigen Datenwörtern mit beliebiger Disparität und unendlicher Lauflänge ein Symbol mit garantierter Disparität und garantierter Lauflänge zu erzeugen. Dies führt zu einem Overhead bei der Übertragung. Es müssen also mehr Bits (in Form von Symbolen) übertragen werden als in dem netto zu übertragenden Daten Wort vorkommen. Das führt dazu, dass die benötigte Übertragungsgeschwindigkeit (Bandbreite) größer sein muss als die Datenrate der zu übertragenden Daten. Dies führt wiederum dazu, dass Systeme höhere Fehlerraten oder mehr Aufwand, Strom, etc. benötigen, als zur Übertragung der Rohdaten notwendig wäre.

Der Stand der Technik weist entweder einen hohen Overhead auf (8B10B) oder die Qualität des kodierten Signals hinsichtlich Disparität und Lauflänge ist sehr schlecht, so dass oft noch zusätzliche Maßnahmen (Komplexität) wie Scrambler notwendig werden, um die Qualität bei Disparität oder Lauflänge zu verbessern.

Demgemäß ist es eine Aufgabe der vorliegenden Erfindung ein Verfahren zu schaffen, welches eine besonders effizient übertragbare Bitfolge erzeugt. Effizient kann sich hierbei auf die Hardwareeffizienz, die effiziente Entschlüsselung auf der Empfängerseite, die fehlende Notwendigkeit einer redundanten Datenübermittlung aufgrund nicht interpretierbarer Signale und/ oder auf das Verhältnis von Nutzdaten zu Überhangdaten beziehen. Darüber hinaus soll es erfindungsgemäß möglich sein, eine besonders effiziente Hardware zu schaffen bzw. zu verwenden, welche eine Laufzeitoptimierung durch eine parallele Verarbeitung ermöglicht. Ferner ist es eine Aufgabe eine entsprechend eingerichtete Systemanordnung bereitzustellen, sowie ein Computerprogrammprodukt und ein computerlesbares Speichermedium mit Steuerbefehlen, welche das Verfahren ausführen bzw. die Systemanordnung betreiben.

Die Aufgabe wird gelöst mit den Merkmalen des Patentanspruchs 1. Weitere vorteilhafte Ausgestaltungen sind in den Unteransprüchen angegeben.

Demgemäß wird ein Verfahren in einem Automobil zum Erzeugen einer effizient übertragbaren Bitfolge mit einer eingeschränkten Disparität und einer eingeschränkten Lauflänge vorgeschlagen, aufweisend ein Bereitstellen einer beliebigen Bitfolge; ein Segmentieren der bereitgestellten Bitfolge in eine vorab definierte Folge von Segmenten gemäß einer jeweils vorab definierten Bitlänge; und ein Kodieren jedes Segments in jeweils ein Teilsymbol, unter Verwendung jeweils einer Kodiereinheit je Segment aus einer Mehrzahl von Kodiereinheiten, wobei eine erste Teilmenge von Kodiereinheiten ein Vorzeichen der Disparität des Teilsymbols durch Invertieren der Disparität des erzeugten Teilsymbols zum Ausgleich einer Disparität einer zweiten Teilmenge von Kodiereinheiten aktiv steuert, wobei eine Aneinanderreihung der Teilsymbole die effizient übertragbare Bitfolge ergibt.

In einem vorbereitendem Verfahrensschritt ist es möglich, einen potenziell unendlich andauernden Bitstrom bereitzustellen, welcher die beliebige Bitfolge aufweist. Der Datenstrom ist je nach Anwendungsszenario bereits beliebig lang ausgestaltet und kann wiederum in Worte beziehungsweise eine beliebige Bitfolge unterteilt werden. Somit wird ein Ausgangsdatenstrom bereitgestellt, welcher eine Bitfolge aufweist, die potentiell beliebig lang ist. Diese beliebige Länge kann aber in einem vorbereitendem Verfahrensschritt definiert werden und kann bevorzugt als 112 Bit definiert werden. Sobald die Länge beziehungsweise die Bitlänge der beliebigen Bitfolge definiert ist, ist diese gemäß einem Aspekt der vorliegenden Erfindung festgeschrieben. Insofern kann eine beliebige Länge der Bitfolge im Sinne der vorliegenden Erfindung nicht als willkürlich verstanden werden. Vielmehr kann als Synonym der beliebigen Bitfolge erfindungsgemäß eine Bitfolge vorgesehen sein, welche vorab in der Länge frei wählbar ist und/ oder deren Inhalt den zu übertragenden Daten entspricht oder zumindest eines Teils der zu übertragenden Daten.

In einem vorbereitendem Verfahrensschritt ist es folglich möglich, einen Ausgangsdatenstrom bereitzustellen, welcher die beliebige Bitfolge aufweist. Diese beliebige Bitfolge wird sodann aus dem Ausgangsdatenstrom ausgelesen und in einem ersten Verfahrensschritt bereitgestellt.

Typischerweise kann der Ausgangsdatenstrom beziehungsweise die Ausgangsbitfolge so viele Bits aufweisen, dass das Verfahren derart iterativ durchgeführt wird, dass mehrere beliebige Bitfolgen aus der Ausgangsbitfolge erzeugt werden, segmentiert werden, in Teilsymbole überführt werden, bezüglich der Disparität optimiert werden und sodann übertragen werden. Somit kann auch die Ausgangsbitfolge beliebig lang sein und kann in mehreren Gesamtsymbolen letztendlich übertragen werden.

Die Kodiereinheiten liegen in Mehrzahl vor, wobei jedem Segment, welches wiederum eines Teils der beliebigen beziehungsweise vorab frei wählbaren Bitfolge entspricht, eine Kodiereinheit zugeordnet ist. Diese überführt das Segment sodann in ein Teilsymbol, wobei die Menge der Teilsymbole konkateniert das Symbol beziehungsweise das Gesamtsymbol der effizient zu übertragenden Bitfolge entspricht. Somit liegt also gemäß einem Aspekt der vorliegenden Erfindung in einem logischen Pfad der Verarbeitungskette beziehungsweise der strukturellen Anordnung zwischen einem Segment und einem Teilsymbol eine Kodiereinheit.

Das vorgeschlagene Verfahren ist besonders effizient, da die übertragbare Bitfolge verglichen mit dem Stand der Technik einen besonders hohen Grad an Nutzdaten aufweist. Beispielsweise ist es möglich 128 Bit zu übertragen, welche 112 Bit Nutzdaten aufweisen. Somit ist das vorgeschlagene Verfahren in diesem Aspekt dem Stand der Technik bereits überlegen. Darüber hinaus ist die Erstellung der übertragbaren Bitfolge besonders effizient, da dies parallelisiert erfolgen kann und hierzu Kodiereinheiten verwendet werden können, die besonders einfach ausgestaltet sind. Einfach heißt in diesem Zusammenhang zum Beispiel, dass besonders wenige Schaltungen in den Kodiereinheiten verbaut werden müssen. Die Kodiereinheiten müssen keine umfangreiche Logik aufweisen und können sogar für eine bestimmte Anzahl an Bit optimiert werden. So ist es erfindungsgemäß möglich, dass der Eingang und der Ausgang der jeweiligen Kodiereinheit bezüglich der Bitanzahl festgelegt ist.

Aufgrund der optimierten Disparität der zu übertragenden Bitfolge ist es möglich, dass Fehler bei einem Interpretieren auf einem seriellen Kanal vermieden werden. Somit bezieht sich die Effizienz auch darauf, dass die Bitfolge besonders fehlerrobust ist und somit kann diese verlässlicher Weise lediglich einmal übertragen werden. Eine redundante Übertragung wird aufgrund der hohen Erkennbarkeit, wiederum aufgrund der optimierten Disparität, vermieden.

Bei der seriellen Übertragung von Daten ist es vorteilhaft, die Anzahl von Einsen und Nullen im seriellen Datenstrom möglichst in gleicher Anzahl vorzuhalten. Dies wird generell als Disparität bezeichnet. Für eine zuverlässige Taktwiederherstellung am Empfänger kann der erzeugten Kanalsequenz eine Lauflängenbeschränkung auferlegt werden. Hierdurch wird die maximale Anzahl aufeinanderfolgender Einsen und Nullen begrenzt. Somit kann das vorgeschlagene Verfahren auch als ein Verfahren zum effizienten Kodieren einer Bitfolge bezeichnet werden. Erfindungsgemäß wird die Disparität durch ein geschicktes Einstellen von Teil-Disparitäten optimiert. Dies kann besonders vorteilhaft dann Anwendung finden, wenn die Lauflänge der Bitfolge beschränkt ist. Die eingeschränkte Disparität und die eingeschränkte Lauflänge können sich auch auf die bereitgestellte beliebige Bitfolge beziehen. Somit muss es sich hierbei nicht um die effizient übertragbare Bitfolge handeln. Insgesamt ist die bereitgestellte beliebige Bitfolge effizient übertragbar bzw. aus dieser Bitfolge wird eine zu übertragende Bitfolge generiert bzw. erzeugt, welche sodann effizient übertragbar ist.

In einem vorbereitenden Verfahrensschritt erfolgt ein Bereitstellen einer beliebigen Bitfolge, welche Nutzdaten kodiert. In dieser beliebigen Bitfolge können Probleme auftreten, welche beispielsweise darin bestehen, dass eine unvorteilhafte Disparität gegeben ist. So können zu viele Nullen bei einem Übertragen zu Problemen führen. Dies ist zu vermeiden und somit wird in weiteren Verfahrensschritten die beliebige Bitfolge derart optimiert, dass diese nunmehr effizient zu übertragen ist. Die bereitgestellte beliebige Bitfolge stellt also irgendwelche Nutzdaten dar, die von einem Sender an einen Empfänger über einen seriellen Datenkanal gesendet werden sollen. Bei der beliebigen Bitfolge kann es sich beispielsweise um Steuerdaten in einem Automobil handeln.

Erfindungsgemäß erfolgt eine Segmentierung der bereitgestellten Bitfolge in eine vorab definierte Folge von Segmenten gemäß einer jeweils vorab definierten Bit Länge. Somit wird also der Eingabedatenstrom, also die beliebige Bitfolge, gemäß einem vordefinierten Verfahren aufgeteilt, sodass einzelne Datensegmente entstehen. Die Segmente ergeben also kumuliert die beliebige Bitfolge. Die vorab definierte Bit Länge hat den Vorteil, dass Kodiereinheiten genauso optimiert werden können, dass die jeweilige Bit Länge berücksichtigt wird. Somit können besonders effiziente Schaltungen geschaffen werden, die hoch spezialisiert sind. Im Weiteren werden definierte Bit Längen genannt, welche jedoch lediglich beispielhaft sind.

Es erfolgt ein Kodieren jedes Segments in jeweils ein Teilsymbol unter Verwendung jeweils einer Kodiereinheit je Segment aus einer Mehrzahl von Kodiereinheiten. Das Kodieren an sich erfolgt in jeweils einer Kodiereinheit, welche jeweils ein Segment am Eingang vorfindet und sodann dieses Segment in ein Teilsymbol überführt. Bei dem Teilsymbol handelt es sich ebenfalls um eine Bitfolge. Insgesamt wird also die beliebige Bitfolge in Segmente unterteilt, diese Segmente werden durch jeweils eine Kodiereinheit in ein Teilsymbol überführt und die Gesamtheit der Teilsymbole ergibt die zu übertragende Kodierung der beliebigen Bitfolge. Insgesamt ist es vorteilhaft, dass die Anzahl der Segmente der Anzahl der Kodiereinheiten entspricht und somit der Anzahl der Teilsymbole. Somit ist es möglich, dass jedes Segment genau eine Kodiereinheit vorfindet, welche wiederum aus dem Segment genau ein Teilsymbol erzeugt. Die Mehrzahl von Kodiereinheiten beschreibt alle zu verwendenden Kodiereinheiten, die der Anzahl der Segmente entspricht. Die Anzahl der Segmente ist vordefiniert, da eine vorab definierte Bit Länge vorgegeben ist. Somit ist das Verfahren also insgesamt deterministisch.

Damit sich insgesamt eine vorteilhafte Disparität einstellt gibt es eine erste Teilmenge von Kodiereinheiten, welche ein Vorzeichen der Disparität des Teilsymbols durch Invertieren der Disparität des erzeugten Teilsymbols zum Ausgleich einer Disparität einer zweiten Teilmenge von Kodiereinheiten aktiv steuert. Dies bedeutet also, dass es Teilmengen von Kodiereinheiten gibt, welche das Vorzeichen der Disparität steuern oder eben nicht. Kodiereinheiten der ersten Teilmenge steuern dieses Vorzeichen und Kodiereinheiten der zweiten Teilmenge steuern diese nicht. Somit können Kodiereinheiten der ersten Teilmenge als aktiv bezeichnet werden und Kodiereinheiten der zweiten Teilmenge als passiv. Durch die unterschiedlichen Teilmengen bzw. Typen von Kodiereinheiten ist es möglich die Kodiereinheiten derart in Serie zu schalten, dass Kodiereinheiten der ersten Teilmenge die Gesamtdisparität auch der Teilsymbole aus den Kodiereinheiten der zweiten Teilmenge vorteilhaft ausgestalten.

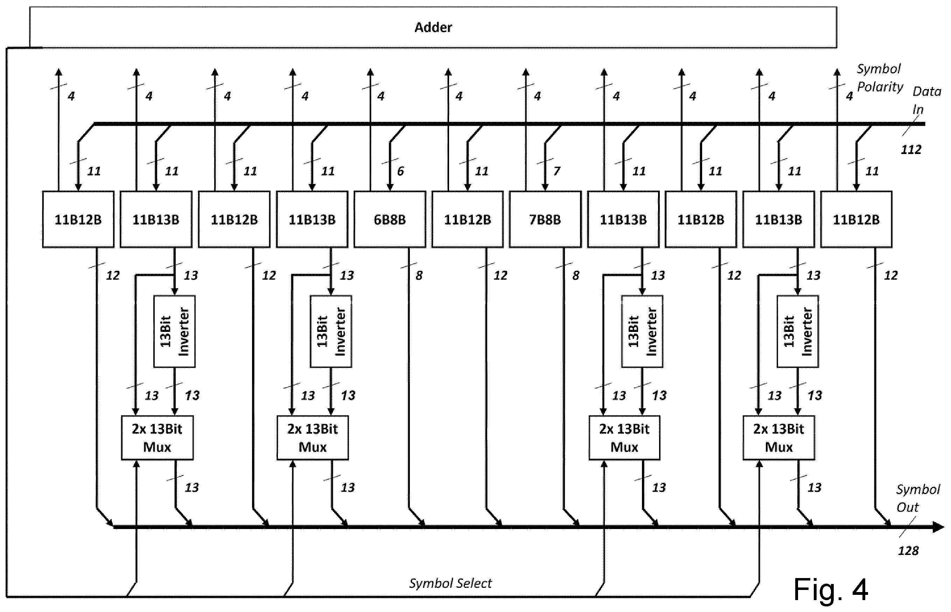

Erfindungsgemäß werden also Kodiereinheiten verwendet, die bezüglich der Disparität des Teilsymbols beliebig sind. Sodann kann eine Kodiereinheit der ersten Teilmenge parallelgeschaltet werden, welches in Abhängigkeit der Disparität der Kodiereinheit der zweiten Teilmenge das Vorzeichen der Disparität der vorhergehenden Kodiereinheit und der eigenen Kodiereinheit bzw. deren Teilsymbole steuert. Somit wird eine bestimmte Anzahl von Kodiereinheiten der zweiten Teilmenge verwendet und sodann wird eine weitere bestimmte Anzahl von Kodiereinheiten der ersten Teilmenge verwendet. Hierdurch wechseln sich die Typen bzw. Teilmengen der Kodiereinheiten derart, sodass die jeweils nächste parallel geschaltete Kodiereinheit die Disparität des bzw. der vorhergehenden Teilsymbole und/ oder des eigenen Teilsymbols anpasst. Auf diese Art und Weise wird vermieden, dass nicht steuerbare Kodiereinheiten derart hintereinander parallelgeschaltet werden, dass sich eine ungünstige Disparität einstellt. Jede Kodiereinheit der ersten Teilmenge korrigiert somit das Vorzeichen der vorhergehend parallelgeschalteten Kodiereinheiten bzw. deren Teilsymbole. Im Folgenden wird dieses Parallelschalten von Kodiereinheiten noch näher in Bezug auf Figur 4 beschrieben.

Zusammenfassend lässt sich also folgern, dass Kodiereinheiten der ersten Teilmenge jeweils Kodiereinheiten der zweiten Teilmenge bezüglich der Disparität optimieren. Ein Optimieren einer Disparität heißt, dass die Disparität 0 ist. Wie der Fachmann Disparitäten berechnet bzw. diese einstellt, beispielsweise durch Vorzeichenwechseln, ist dem Fachmann hinreichend bekannt.

Gemäß dem vorgeschlagenen Verfahren werden also Teilsymbole geschaffen, welche in ihrer Sequenz bezüglich der Disparität optimiert sind. Da jedes Segment in ein Teilsymbol überführt wird, kann durch ein Aneinanderreihen der Teilsymbole das (Gesamt)-Symbol erzeugt werden, welches zu übertragen ist. Dieses kann besonders effizient bzw. fehlertolerant übertragen werden, da eben die Disparität bzw. die Teil Disparitäten optimiert sind. **In** dieser Art und Weise ergibt sich eine besonders vorteilhaft zu übertragende Bitfolge.

Gemäß einem Aspekt der vorliegenden Erfindung ist die beliebige Bitfolge in ihrer Disparität und Lauflänge uneingeschränkt. Dies hat den Vorteil, dass jede beliebige Menge an Nutzdaten übermittelt werden kann bzw. in eine Bitfolge überführt werden kann, welche in der Disparität eingeschränkt und in der Lauflänge eingeschränkt ist. Somit wird also eine beliebige Bitfolge in eine zu übertragende Bitfolge kodiert, die in ihrer Disparität und Lauflänge optimiert ist.

Gemäß einem weiteren Aspekt der vorliegenden Erfindung ist die Disparität der zweiten Teilmenge von Kodiereinheiten nicht steuerbar. Dies hat den Vorteil, dass anhand der Kodiereinheiten der zweiten Teilmenge ein beliebiges Teilsymbol erzeugt werden kann, wobei besonders einfache Kodiereinheiten zu verwenden sind. Diese können besonders einfach ausgestaltet werden, da das erzeugte Teilsymbol dieser Kodiereinheit keinerlei Beschränkung bezüglich der Disparität oder Lauflänge unterliegt.

Gemäß einem weiteren Aspekt der vorliegenden Erfindung erfolgt das aktive Steuern des Vorzeichens jeweils mittels bedingten Invertierens des Teilsymbols. Dies hat den Vorteil, dass auf einfache Art und Weise das entsprechende Teilsymbol der Kodiereinheiten der ersten Teilmenge gesteuert werden kann. Es muss lediglich die Disparität beziehungsweise einzelne Bits des Teilsymbols invertiert werden. Das Vorzeichen bezieht sich auf die Disparität des Teilsymbols, welches positiv oder negativ sein kann.

Gemäß einem weiteren Aspekt der vorliegenden Erfindung erfolgt das bedingte Invertieren in Abhängigkeit der Disparität eines Gesamtsymbols, welches aus allen Teilsymbolen gebildet wird. Dies hat den Vorteil, dass nicht nur Teilsymbole optimiert werden, sondern es werden auch die gesamten, also die zusammengesetzten Teilsymbole, insgesamt also das Gesamtsymbol bezüglich der Disparität optimiert. Hierdurch entsteht ein besonders vorteilhaftes Gesamtsymbol.

Gemäß einem weiteren Aspekt der vorliegenden Erfindung wird die Abhängigkeit derart beeinflusst, dass ein Betragswert der Disparität minimiert wird. Dies hat den Vorteil, dass eine möglichst niedrige Disparität, vorzugsweise 0, erreicht wird. Es werden also Disparitäten derart miteinander verknüpft, dass der Betrag der Disparitäten möglichst 0 bzw. möglichst gering ist.

Gemäß einem weiteren Aspekt der vorliegenden Erfindung wird der Betragswert derart minimiert, dass bei positiver Gesamtsymbol Disparität durch eine negative Parität der Teilsymbole entgegengesteuert wird. Dies hat den Vorteil, dass die positive Gesamtsymbole Disparität minimiert bzw. eliminiert wird.

Gemäß einem weiteren Aspekt der vorliegenden Erfindung wird der Betragswert derart minimiert, dass bei negativer Gesamtsymbol Disparität durch eine positive Parität der Teilsymbole entgegengesteuert wird. Dies hat den Vorteil, dass die Gesamtsymbol Disparität insgesamt minimiert bzw. eliminiert wird.

Gemäß einem weiteren Aspekt der vorliegenden Erfindung erfolgt das aktive Steuern in Abhängigkeit von bereits übertragener Gesamtsymbole, derart dass die Disparität aller Gesamtsymbole minimiert wird. Dies hat den Vorteil, dass mehrere Gesamtsymbole bezüglich ihrer Disparität minimiert werden bzw. die Disparität eliminiert wird und somit werden auch mehrere Folgen von Gesamtsymbolen bezüglich ihrer Übertragbarkeit optimiert.

Gemäß einem weiteren Aspekt der vorliegenden Erfindung, kodieren Kodiereinheiten der ersten Teilmenge Segmente von 11 Bit auf Teilsymbole von 13 Bit. Dies hat den Vorteil, dass 11 Bit besonders effizient kodiert werden und hierzu lediglich ein Mehraufwand von 2 Bit entsteht. Dies ist insbesondere dann vorteilhaft, wenn ein Gesamtsymbol von 128 Bit geschaffen werden soll. Generell wurden die vorliegend genannten konkreten Werte der vorgeschlagenen technischen Lehre empirisch ermittelt und können dadurch belegt werden, dass lediglich ein zusätzlicher Aufwand von 128 - 112 Bit, also 14 % notwendig ist. Somit sind die hier aufgeführten Werte nachgewiesener Weise vorteilhaft bei einem Übertragen von 112 Bit.

Gemäß einem weiteren Aspekt der vorliegenden Erfindung weisen Kodiereinheiten der ersten Teilmenge eine Disparität zwischen +3 und +9 auf, welche durch Invertieren gezielt auf -3 bis -9 invertiert werden. Dies hat den Vorteil, dass beispielsweise eine Disparität von +3 mit einer Disparität von -3 aufgehoben wird, was analog bei einer Anpassung der Disparität von +9 mit einer Disparität von -9 erfolgt. Dies ist wiederum insbesondere bei einer beliebigen Bit Folge von 112 Bit besonders vorteilhaft, welche als 128 Bit kodiert werden soll.

Gemäß einem weiteren Aspekt der vorliegenden Erfindung beträgt die Lauflänge in Teilsymbolen maximal 7. Dies hat den Vorteil, dass maximal 7 gleiche Instanzen von Nullen und Einsen erzeugt werden, was im vorgeschlagenen Szenario von 112 Bit bzw. 128 Bit besonders vorteilhaft ist.

Gemäß einem weiteren Aspekt der vorliegenden Erfindung beträgt die Lauflänge des Teilsymbols bei Kodiereinheiten der ersten Teilmenge ausgehend vom höchstwertigsten und/ oder vom niederwertigsten Bit maximal 5. Dies hat den Vorteil, dass am Ende bzw. am Anfang eines Teilsymbols maximal 5 gleiche Bit vorliegen können. Dies hat sich im beschriebenen Szenario ebenfalls als besonders vorteilhaft erwiesen.

Gemäß einem weiteren Aspekt der vorliegenden Erfindung werden bei Kodiereinheiten der zweiten Teilmenge 11 Bit- Segmente auf 12 Bit Teilsymbole oder 7 Bit- Segmente auf 8 Bit Teilsymbole oder 6 Bit- Segmente auf 8 Bit Teilsymbole kodiert. Dies hat den Vorteil, dass anhand dieser Kodierung in dem Szenario von zu übertragenden 112 Bit in einem Symbol von 128 Bit besonders vorteilhafte Werte entstehen, die einen minimierten Überhang von lediglich 14 % aufweisen.

Gemäß einem weiteren Aspekt der vorliegenden Erfindung wird bei Kodiereinheiten der zweiten Teilmenge eine Disparität zwischen -2 und +2 erzeugt. Dies hat den Vorteil, dass wiederum besonders vorteilhafte Disparitäten erzeugt werden.

Gemäß einem weiteren Aspekt vorliegenden Erfindung ist bei Kodiereinheiten der zweiten Teilmenge die Lauflänge im erzeugten Teilsymbol 6. Dies hat den Vorteil, dass wiederum besonders optimierte Teilsymbole erzeugt werden.

Gemäß einem weiteren Aspekt der vorliegenden Erfindung erzeugen Kodiereinheiten der zweiten Teilmenge Teilsymbole, welche am Rand eine Lauflänge von maximal 3 aufweisen. Dies hat den Vorteil, dass Teilsymbole, welche durch die zweite Teilmenge von Kodiereinheiten geschaffen werden am Anfang bzw. am Ende eine Lauflänge von maximal 3 aufweisen, was ein besonders vorteilhafter Wert ist.

Gemäß einem weiteren Aspekt vorliegenden Erfindung werden die Kodiereinheiten parallel angesprochen und jeweils ein Segment in ein Teilsymbol kodiert. Dies hat den Vorteil, dass ein Segment in genau ein Teilsymbol mit genau einer Kodiereinheit überführt wird. Somit können also die Kodiereinheiten parallel angesprochen werden, da aus der beliebigen Bitfolge Segmente gebildet werden, welche parallel in Teilsymbole überführt werden können.

Gemäß einem weiteren Aspekt der vorliegenden Erfindung werden die Kodiereinheiten in der Reihenfolge 21212221212 angesprochen, wobei eine 1 für eine Kodiereinheit der ersten Teilmenge steht und eine 2 für eine Kodiereinheit der zweiten Teilmenge. Dies hat den Vorteil, dass auf eine nicht aktiv gesteuerte Anzahl von Kodiereinheiten stets eine einzige Kodiereinheit folgt, welche aktiv gesteuert werden kann. Hierzu wurde empirisch ermittelt, dass gerade bei den vorgeschlagenen Kodiereinheiten ein besonders vorteilhaftes Gesamtsymbol resultiert.

Gemäß einem weiteren Aspekt der vorliegenden Erfindung wird ein Multiplexer bei einem Anlegen eines bezüglich der Disparität positiven Datenstroms und eines negativen Datenstroms denjenigen Datenstrom aus, der zur Minimierung der Gesamtdisparität des Gesamtsymbols beiträgt. Dies hat den Vorteil, dass der geeignete Datenstrom gewählt werden kann, welcher ein Vorzeichen aufweist, welches die Disparität minimiert bzw. eliminiert. Ist beispielsweise die zu optimierende Disparität negativ, so wird ein Datenstrom mit positiver Disparität gewählt, der sodann diesen Datenstrom eben bezüglich dessen Disparität minimiert bzw. ausgleicht.

Ein Aspekt der vorliegenden Erfindung ist es, mehrere Datenströme (Video, Audio und Daten) in einem Transportframe zu bündeln und seriell zu übertragen. Die unterschiedlichen Datenformate haben nicht nur unterschiedliche Bandbreitenanforderungen, sondern auch unterschiedliche Latenz-, Reassembly Teilschicht- und Bitfehlerratenanforderungen. Insbesondere die Übertragung heutiger Videodatenformate erfordert nicht nur die Übertragung der reinen Videodaten und deren Frame-Informationen, sondern auch die Unterstützung von Verschlüsselungsverfahren wie HDCP. All dies erfordert viele unterschiedliche Datenkanäle mit unterschiedlichsten Anforderungen an Bandbreite, Latenz, Reassembly Teilschicht etc. Hinzu kommt der Wunsch nach weitaus komplexeren Netzwerkarchitekturen als eine einfache Sender-Empfänger-Architektur bietet. Architekturen mit mehreren Repeatern, wo Datenpfade beginnen und enden können, Verzweigungen (Y) auch mit der Möglichkeit, Datenpfade wieder in einen Link zu integrieren, sind vorteilhaft.

Die Technologie folgt gemäß einem Aspekt der vorliegenden Erfindung dem Grundgedanken der Dienste ganz konsequent zu bündeln, bietet aber völlig neue Möglichkeiten hinsichtlich Netzwerkarchitekturen und erlaubt neue Ansätze bei der Implementierung heutiger Videoschnittstellen. Darüber hinaus kann es als universeller Datentransportschicht verwendet werden, beispielsweise auch zur Übertragung von Ethernet- oder Kameradaten oder jeglicher Art von Sensordaten.

Bei einem virtuellen Pfad nehmen alle Pakete/ Zellen denselben Pfad, im Gegensatz **zu IP,** wo ein Paket sein Ziel über eine andere Route erreichen könnte als vorherige und nachfolgende Pakete. Latenz und Reassembly Sublayer über einen virtuellen Pfad sind somit konstant.

Virtuelle Pfade haben außerdem den Vorteil, dass sie als Multiplexing- Ableger für unterschiedliche Dienste (Video, Audio, Ethernet) verwendet werden können, da die Eigenschaften der virtuellen Pfade unterschiedlich konfiguriert werden können, ohne dass sich die verschiedenen virtuellen Pfade gegenseitig stören.

Virtuelle Pfade verbrauchen nur dann Bandbreite, wenn tatsächlich Daten übertragen werden.

Das Konzept der virtuellen Pfade ermöglicht es auch, komplexe und weitreichende Diagnose- und Netzwerkkonfigurationsfunktionen zur Laufzeit mit eigenen (virtuellen) Datenkanälen zu realisieren.

Gemäß einem Aspekt der vorliegenden Erfindung wird eine virtuelle Pfadschicht zwischen der physikalischen Schicht (Serializer und Framer) und den verschiedenen Anwendungsdatenschnittstellen.

Diese wird gemäß einem Aspekt der vorliegenden Erfindung verwendet, um die verschiedenen Datenpfade zu Multiplexen und komplexere Architekturen mit Repeatern und Verzweigungen zu unterstützen. Dies geschieht hauptsächlich in der Zellschicht.

Ein weiterer Teil der virtuellen Pfadschicht ist gemäß einem Aspekt der vorliegenden Erfindung eine Anwendungsanpassungsschicht, die die Konvertierung von Video (Stream) oder z.B. Ethernet-(Paket-)Daten in die Zellen vornimmt. Diese Anwendungsanpassungsschicht umfasst auch die OAM-Funktionen für die Netzwerkdiagnose und -verwaltung.

Die Technologie kann gemäß einem Aspekt der vorliegenden Erfindung die Grundlage für die Übertragung einer Vielzahl von Datenformaten über eine serielle Verbindung im Auto (und anderswo) sein. Es bildet damit die Basis für eine neue Gerätegeneration.

Die hohen seriellen Bandbreiten machen es erforderlich, Architekturen, Zellformate und Schnittstellen zu definieren, die flexible interne Datenbusbreiten ermöglichen, um die Geschwindigkeit des internen Zeitsystems an die Möglichkeiten der Chiptechnologie anzupassen.

Die virtuelle Pfadschicht ist gemäß einem Aspekt der vorliegenden Erfindung die physikalische Schicht, die aus der Übertragungsteilschicht und der Teilschicht des physikalischen Mediums besteht, die Zellschicht und die Anwendungsanpassungsschicht, die die Segmentierungs- und Reassembly Sublayer und die Funktionen zum Anpassen der Datenformate an die entsprechende Anwendung enthält.

Die Hauptaufgabe besteht darin, die physikalische Verbindung zu anderen physikalischen Schichten herzustellen. Diese Verbindung ist grundsätzlich bidirektional zu verstehen. Theoretisch lässt sich diese Verbindung über verschiedenste Medien realisieren. Praktisch werden zwei serielle differenzielle GBps-Verbindungen verwendet. In dieser Schicht erfolgen die Leitungskodierung, das Einfügen von Leerzellen zur Entkopplung der Zellenrate von der Verbindungsrate und die Integration des Zellenstroms in den seriellen Rahmen.

In der Zellschicht werden die segmentierten Daten (Zell-Nutzdaten) der darüber liegenden Segmentation & Reassembly-Unterschicht mit Header, VP-Kennung und CRC zu vollständigen Zellen zusammengesetzt oder Zellen werden CRC-geprüft und die Nutzlast wird an die Segmentierungs- und Reassembly-Teilschicht weitergegeben. Hier erfolgt auch das Multiplexen der unterschiedlichen Zellströme der Anwendungsanpassungsfunktionen bzw. die Verteilung der Zellnutzlasten auf die Anwendungsanpassungsfunktionen gemäß dem VP Identifier. (Einspeisen / Ausspeisen)

In der Zellschicht erfolgt gemäß einem Aspekt der vorliegenden Erfindung auch das Multiplexing und Demultiplexing von Zellströmen in Repeatern und Splittern (Forwarding).

Die Aufgabe der Anwendungsanpassungsfunktionen besteht gemäß einem Aspekt der vorliegenden Erfindung darin, die Daten der Anwendungsschnittstellen an das Format des Nutzdatenfeldes der Zelle anzupassen und Steuerinformationen an die Gegenseite zu übermitteln bzw. Steuerinformationen der Gegenseite für die zu verwenden Anpassung (Zeitgenerierung, Rahmenbildung).

Gemäß einem Aspekt der vorliegenden Erfindung sind alle virtuellen Datenpfade unidirektional, d.h. sie beginnen bei einem Initiator und enden bei einem oder mehreren Zielen. Wenn virtuelle Datenpfade logisch zusammengehören, z. HDCP für einen Videokanal, und somit einen bidirektionalen Datenpfad bilden, sollten diese Pfade dieselben VP-Kennungen haben.

Der virtuelle Datenpfad beginnt bei einem Initiator und endet bei einem oder mehreren Zielen. Die Realisierung erfolgt durch die

Zellteilschicht und führt die folgenden Funktionen auf dem virtuellen Pfad aus:
- Multiplexing hinzufügen/ löschen
- VP-Übersetzung

### Stream data (kontinuierlicher Datenstrom)

Die Stream Data-Funktion kombiniert die Zeitdomänenüberquerung und die Bitweite Umwandlung von Daten von der Anwendungsschnittstelle zu den N Bits der Zellenzeilen. Dabei ist die Zellzeilennutzlast bereits so vorformatiert, dass Zell Footer und Header in die erste und letzte Zellzeile passen.

Gestreamte Daten sind (normalerweise) quellensynchron. Hier wird die Zeitdomänenüberquerung (clock domain crossing) des Datenpfads von der Anwendungszeitdomäne zur Zeitschichtdomäne (application clock domain to the Virtual Path Layer clock domain) durchgeführt.

In Senderichtung ist ein Datenpuffer vorgesehen, in den die quellensynchronen Daten mit dem Quellentakt geschrieben werden. Die Segmentierungsschicht ruft die Daten aus diesem Puffer nach Bedarf ab, um die Datenformatumwandlung in die N Bit breiten Reihen der Zellen durchzuführen. Frame-Daten (z. B.: Hsync, Vsync, DE) werden in Payload Info Bits kodiert, sodass auf der Empfängerseite eine Rekonstruktion des Frames möglich ist.

In der Empfangsrichtung werden die Zellendaten von der Reassembly Teilschicht in einen Datenpuffer geschrieben, wobei die Zellenreihen-Bitbreite ist (with cell row bit width). Basierend auf den Payload Info Bits werden die Rahmeninformationen rekonstruiert. Der Quellentakt wird zum Beispiel unter Verwendung von Pufferfüllstand und Taktsynthese regeneriert.

Ist eine Verschlüsselung der Daten erforderlich (HDCP), werden in dieser Funktion die Zelldaten verschlüsselt bzw. entschlüsselt.

Aufgrund der unterschiedlichen Arten von gestreamten Daten, wie z. B.: Audio, Video mit und ohne Verschlüsselung, kann es unterschiedliche Implementierungen dieser Grundfunktion geben (z. B.: VStream In/Out; AStream In/Out; EncVStream In/Out).

Die Schnittstelle zur Segmentierungs- & Reassembly Teilschicht ist für alle Funktionen gleich.

### Burst data (diskontinuierlicher Datenstrom)

Die Burst-Daten-Funktion kombiniert die Zeitdomänenkreuzung und die bitweite Umwandlung (clock domain crossing and data bit wide conversion) von Daten von der Anwendungsschnittstelle zu den N Bits der Zellenzeilen. Dabei ist die Zellzeilennutzlast bereits so vorformatiert, dass Zellfuß und -kopf in die erste und letzte Zellzeile passen.

Burst-Daten sind (normalerweise) synchron zu einer externen Zeit und haben unterschiedliche Kennzeichnungssignale für Richtung und Datentyp (Adresse / Daten / ByteEnable).

Diese Daten werden normalerweise von Steuerleitungen begleitet, um ein bestimmtes Protokoll zu realisieren.

In Senderichtung ist ein Datenpuffer vorgesehen, in den die Burstdaten mit dem Schnittstellentakt geschrieben werden. Die Segmentierungsschicht ruft die Daten aus diesem Puffer nach Bedarf ab, um die Datenformatumwandlung in die N Bit breiten Reihen Zellen durchzuführen.

In der Empfangsrichtung werden die Zellendaten von der Reassembly Teilschicht in einen Datenpuffer geschrieben, wobei die Zellenreihe bitbreit ist. Basierend auf den Payload Info Bits werden die Schnittstellensteuersignale rekonstruiert.

Die Payload-Info-Bits werden verwendet, um die Steuersignale der anwendungsspezifischen Schnittstellen zu erzeugen oder die Protokollzustandsmaschinen in den anwendungsspezifischen Schnittstellen zu synchronisieren.

Aufgrund der unterschiedlichen Schnittstellen, die Burst-ähnliche Daten bereitstellen (SPI, I2C, MII), kann es unterschiedliche Implementierungen dieser Grundfunktion geben (z. B.: SPIBurst, I2CBurst, MIIBurst).

Dementsprechend wird es auch (leicht) unterschiedliche Stream In/Out-Schnittstellen geben, deren Struktur jedoch gleich sein sollte.

Die Aufgabe wird auch gelöst durch eine Systemanordnung in einem Automobil zur Erzeugung einer effizienten übertragbaren Bitfolge mit einer eingeschränkten Disparität und einer eingeschränkten Lauflänge aufweisend eine Schnittstelleneinheit eingerichtet zum Bereitstellen einer beliebigen Bitfolge; eine Segmentierungseinheit eingerichtet zum Segmentieren der bereitgestellten Bitfolge in eine vorab definierte Folge von Segmenten gemäß einer jeweils vorab definierten Bitlänge; und eine Kodieranordnung eingerichtet zum Kodieren jedes Segments in jeweils ein Teilsymbol, unter Verwendung jeweils einer Kodiereinheit je Segment aus einer Mehrzahl von Kodiereinheiten, wobei eine erste Teilmenge von Kodiereinheiten ein Vorzeichen der Disparität des Teilsymbols durch Invertieren der Disparität des erzeugten Teilsymbols zum Ausgleich einer Disparität einer zweiten Teilmenge von Kodiereinheiten aktiv steuert, wobei eine Aneinanderreihung der Teilsymbole die effizient übertragbare Bitfolge ergibt.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zur Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. **In** den Figuren zeigen:
Figur 1: ein schematisches Ablaufdiagramm eines Verfahrens zum Erzeugen einer effizienten übertragbaren Bitfolge mit einer eingeschränkten Disparität und einer eingeschränkten Lauflänge gemäß einem Aspekt der vorliegenden Erfindung;
Figur 2: ein grundsätzliches Frameformat und die Anwendung eines sogenannten Blockcode gemäß einem Aspekt vorliegenden Erfindung;
Figur 3: ein schematisches Diagramm eines Aufbaus und der Struktur des sogenannten Blockcode gemäß einem weiteren Aspekt der vorliegenden Erfindung;
Figur 4: ein schematisches Blockschaltbild der Systemanordnung zum Erzeugen einer effizient übertragbaren Bitfolge mit einer eingeschränkten Disparität und einer eingeschränkten Lauflänge gemäß einem weiteren Aspekt vorliegenden Erfindung;
Figur 5: ein schematisches Diagramm eines Rahmenformats, wie es erfindungsgemäß Anwendung finden kann; und
Figuren 6A, 6B, 6C, 6D: beispielhafte Kodierungen von Datensegmenten auf Symbole derart, dass die Disparität gemäß einem Aspekt der vorliegenden Erfindung optimiert ist.

Die vorliegenden Figuren weisen teilweise Parameter auf, welche dem Fachmann in der englischen Bezeichnung so geläufig sind und welche als Parameter verwendet werden und so nicht zu übersetzen sind.

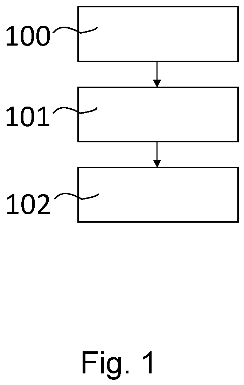

Figur 1 zeigt in einem schematischen Ablaufdiagramm ein Verfahren in einem Automobil zum Erzeugen einer effizient übertragbaren Bitfolge mit einer eingeschränkten Disparität und einer eingeschränkten Lauflänge, aufweisend ein Bereitstellen 100 einer beliebigen Bitfolge; ein Segmentieren 101 der bereitgestellten Bitfolge in eine vorab definierte Folge von Segmenten gemäß einer jeweils vorab definierten Bitlänge; und ein Kodieren 102 jedes Segments in jeweils ein Teilsymbol, unter Verwendung jeweils einer Kodiereinheit je Segment aus einer Mehrzahl von Kodiereinheiten, wobei eine erste Teilmenge von Kodiereinheiten ein Vorzeichen der Disparität des Teilsymbols durch Invertieren der Disparität des erzeugten Teilsymbols zum Ausgleich einer Disparität einer zweiten Teilmenge von Kodiereinheiten aktiv steuert, wobei eine Aneinanderreihung der Teilsymbole die effizient übertragbare Bitfolge ergibt.

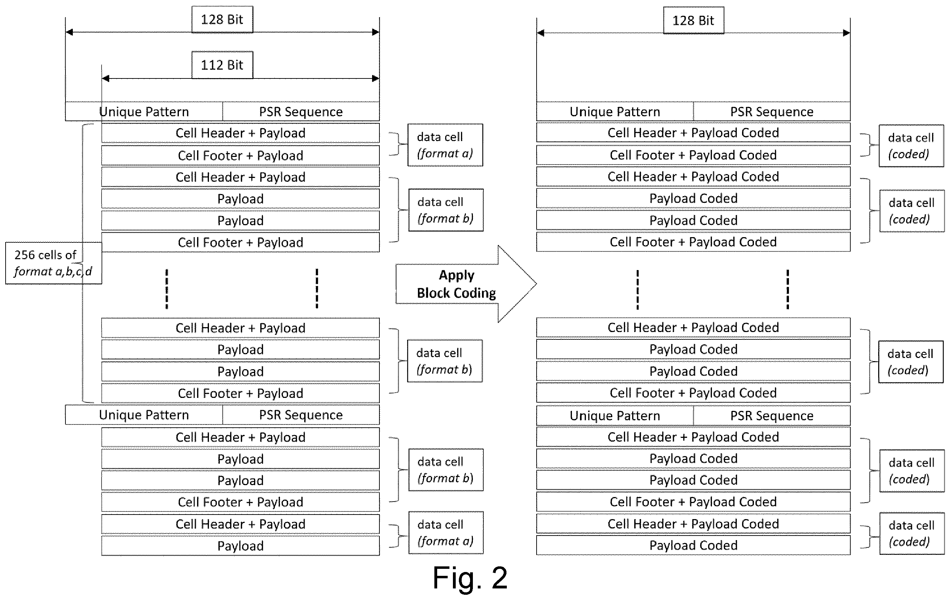

Figur 2 zeigt ein Datenformat, welches auf der linken Seite eine beliebige Bitfolge zeigt und auf der rechten Seite Teilsymbole. Die zu kodierenden Daten haben 112 Bit und die Teilsymbole haben 128 Bit. Auf diese Art und Weise wird eine beliebige Bitfolge von 112 Bit auf ein Gesamtsymbol von 128 Bit kodiert. Die kodierten 128 Bit sind bezüglich der Disparität optimiert. Der Pfeil in der Mitte deutet an, dass die Kodiereinheiten die Datensegmente auf der linken Seite in Teilsymbole auf der rechten Seite übersetzen. Auch ist in der vorliegenden Figur gezeigt, dass das Verfahren mehrfach angewendet werden kann, sodass auch mehrere beliebige Bitfolgen in mehrere beliebige Gesamtsymbole übersetzt werden kann. Darüber hinaus können die Daten in unterschiedliche Datenzellen bzw. Datenrahmen aufgeteilt sein.

Auch wenn die Daten auf der linken Seite semantisch den gleichen Inhalt haben wie die Daten auf der rechten Seite, so sind die Daten auf der rechten Seite derart kodiert, dass diese in ihrer Disparität optimiert sind. Generell ist das vorliegende Verfahren auf jegliche Daten anzuwenden, daher die beliebige Bitfolge, und es können sowohl Nutzdaten als auch Kopfdaten überführt werden.

Die eingetragenen Datenfelder sind lediglich beispielhaft zu verstehen und formen ein Anwendungsbeispiel der vorliegenden Erfindung.

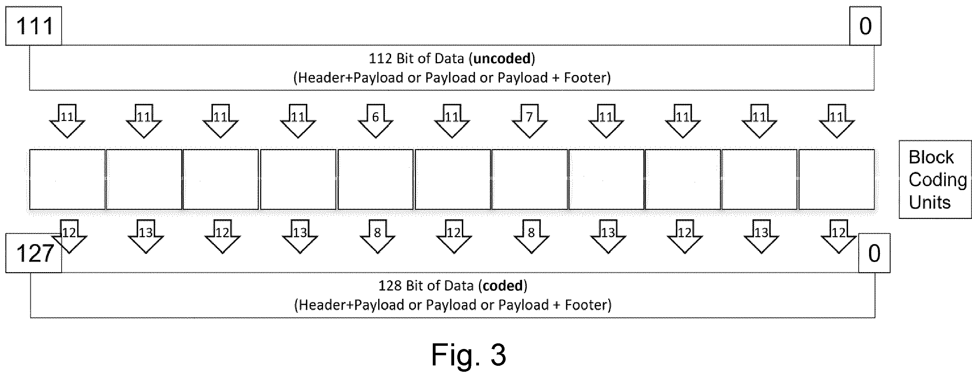

Figur 3 zeigt in der Mitte die Kodiereinheiten mitsamt den Eingängen und Ausgängen. Als Ausgangsdaten liegen 112 Bit vor, welche vorliegend den Index 0-111 aufweisen. Diese werden zerlegt in Segmente, welche 11,6, 7 oder andere Belegungen an Bitlängen aufweisen. Im vorliegenden Beispiel werden diese Segmente in Teilsymbole von 12,13, 8 oder andere Datenlängen übersetzt. Das vorgeschlagene Beispiel ist besonders vorteilhaft, da es 112 Bit in 128 Bit kodiert, wodurch ein besonders hohes Maß an Effizienz erreicht wird. So weisen die 128 Bit den gleichen Inhalt auf, wie die zu kodierende Bitfolge und ist lediglich um 16 Bit länger.

In der vorliegenden Figur ist links gezeigt, dass die beliebige Bitfolge von 112 Bit in unter anderem Datensegmente von 11 Bit segmentiert wird und sodann mittels der Kodiereinheit 11B12B in 12 Bit kodiert wird.

Figur 4 zeigt oben, die beliebige Bitfolge von 112 Bit, welche segmentiert wird, in 11,6 oder 7 Bit. Sodann werden parallel die Kodiereinheiten angesprochen, welche die Bits derart in Teilsymbole überführen, dass diese bezüglich der Disparität optimiert sind. Zum Beispiel werden 11 Bit nach 12 Bit kodiert bzw. 11 Bit nach 13 Bit.

In der vorliegenden Figur 4 ist auf der ganz linken Seite in der Mitte eine Kodiereinheit aus der zweiten Teilmenge eingezeichnet, welche die Bezeichnung 11B12B trägt. Diese liefert ein Teilsymbol mit einem beliebigen Vorzeichen, d. h. also mit einer beliebigen Disparität. Um diese Disparität auszugleichen ist die kodierte Einheit 11B13B parallel bezüglich der Bitfolge nachgeschaltet. D. h. also, dass ein Datenstrom gebildet wird, der die höherwertigsten Bits von zweimal 11 in zwei Teilsymbole überführt, nämlich einmal wird durch 11B12B das 11 Bit Datensegment in ein 12 Bit Teilsymbol mit beliebigen Vorzeichen, also Disparität, gebildet und einmal wird das Datensegment von 11 Bit in 13 Bit mittels der Kodiereinheit 11B13B kodiert. In der vorliegenden Figur unterhalb der Kodiereinheiten eingezeichnet ist, handelt es sich bei der zweiten Kodiereinheit von links 11B13B um eine Kodiereinheit der ersten Teilmenge. Diese weist einen Inverter und einen Multiplexer auf. Die ersten 13 Bit liegen also als Datenstrom vor, der derart aufgeteilt wird, dass er einmal bezüglich des Vorzeichens, also der Disparität invertiert wird und einmal unverändert bleibt. Weiter unten angezeichnet ist, dass unter Rückkopplung der Disparität derjenige positive oder negative, d. h. der ursprüngliche oder invertierte Datenstrom verwendet wird, der das Vorzeichen aus der ganz linken Kodiereinheit ausgleicht. An dem ersten Multiplexer links liegen also zwei Datenströme an, welche jeweils das Teilsymbol darstellen, einmal mit herkömmlichem Vorzeichen, wie es also aus der Kodiereinheit 11 Bit 13 Bit ausgegeben wird und einmal mit invertierten Vorzeichen bzw. invertierter Disparität.

Aufgrund der Rückkopplung von der Einheit vorliegend ganz oben wird also festgestellt, welche Disparität aus dem ganz linken Kodierer 11B12B resultiert und somit schafft der Multiplexer, vorliegend ganz links unten, einen Ausgleich bzw. eine Minimierung der Disparität des Teilsymbols des ganz linken Kodierers 11B12B. Dies wird parallel derart durchgeführt, dass den Kodiereinheiten aus der zweiten Teilmenge Kodiereinheiten aus der ersten Teilmenge nachgeschaltet werden, welche die Disparität minimieren bzw. eliminieren. Letztendlich wird ganz rechts unten das Gesamtsymbol ausgegeben. Dieses Gesamtsymbol weist 128 Bit auf und ist aus den Teilsymbolen zusammengesetzt, wie sie mittels der geschrägten Pfeile in die fette Linie unten eingefügt werden. Somit liegen also an dieser Ausgabeleitung die Teilsymbole an, welche bezüglich der Disparität optimiert bzw. minimiert sind und diese Teilsymbole Formen das gesamte Symbol, welches sodann ausgegeben und übertragen werden kann.

Die Erfindung kodiert gemäß einem Aspekt der vorliegenden Erfindung ein 112 Bit breites Datenwort, mit beliebiger Disparität (Disparität max: 112) und beliebiger Lauflänge (Lauflänge max: 112), auf ein 128 Bit breites Symbol. Damit beträgt der durch die Kodierung entstehende Overhead 14.2%.

Die maximal in dem Symbol, wie auch bei beliebiger Sequenzierung beliebiger Symbole auftretende Lauflänge beträgt 8 gleiche Bits.

Die maximale Disparität im langen Mittel ist 0. Die Disparität in einem Symbol ist kleiner 9.

Dabei ist die Komplexität der Logik minimal, vergleichbar mit 10 8B/10B Kodierern (mit dem bekannten Nachteil des großen Overheads).

Erreicht wird dies durch den Einsatz, bzw. die parallele Verwendung von mehreren "kleinen" in ihrer Charakteristik bei Disparität und Lauflänge optimal aufeinander abgestimmten Kodierern.

Die Kodierer 11B12B, 7B8B und 6B8B erzeugen alle Symbole mit einer garantierten maximalen Lauflänge von 6, auch bei beliebiger Sequenzierung der (Teil)Symbole.

Der Kodierer (11B13B) erzeugt gemäß einem Aspekt der vorliegenden Erfindung Symbole mit einer garantierten maximalen Lauflänge von 7 bzw. am Anfang oder Ende des Symbols von 5. Auf Grund der Sequenzierung (Abb2) der (11B13B) mit den anderen Codierern kann so maximal eine Lauflänge von 8 im Symbol entstehen.

Siehe Eigenschaften der Kodierer, wie folgt:
- 11B13B: 11 Bit Daten werden auf 2048 Symbole mit 13 Bit abgebildet. Die Symbole können invertiert oder nicht invertiert übertragen werden.
   Disparität:
   +3... +9 oder steuerbar -3...-9
   Lauflänge im Wort: 7
   Lauflänge am Rand: 5.
- 11B13B: 11 Bit Daten werden auf 2048 Symbole mit 13 Bit abgebildet. Die Symbole können invertiert oder nicht invertiert übertragen werden.
   Disparität: +3... +9 oder steuerbar -3...-9
   Lauflänge im Wort: 7
   Lauflänge am Rand: 5
- 11B12B: 11 Bit Daten werden auf 2048 Symbole mit 12 Bit abgebildet. Die Symbole werden nur nicht invertiert übertragen.
   Disparität: -2, -1, 0, 1, 2
   Lauflänge im Wort: 6
   Lauflänge am Rand: 3
- 7B8B: 7 Bit Daten werden auf 128 Symbole mit 8 Bit abgebildet. Die Symbole werden nur nicht invertiert übertragen.
   Disparität: -2, -1, 0, 1, 2
   Lauflänge im Wort: 6
   Lauflänge am Rand: 3
- 6B8B: 6 Bit Daten werden auf 64 Symbole mit 8 Bit abgebildet. Die Symbole werden nur nicht invertiert übertragen.
   Disparität: 0
   Lauflänge im Wort: 6
   Lauflänge am Rand: 3

Mit den vier 11B13B Kodierern kann steuerbar eine Disparität von mindestens +-12 erzeugt werden, um die nicht steuerbare Disparität von maximal +-12 (6 x +-2) der Kodierer 11B12B und 7B8B auszugleichen, so dass unabhängig von den zu übertragenden Daten eine ausgeglichene Disparität sicher erreicht werden kann.

Um die Komplexität der Hardware weiter zu reduzieren, werden gemäß einem Aspekt der vorliegenden Erfindung 4 kleine Kodierer (11B13B) verwendet, deren Disparität sich hinsichtlich Vorzeichen (+-) steuern lässt.

Die Steuerung der Symbol-Disparität erfolgt gemäß einem Aspekt der vorliegenden Erfindung derart, dass jeder Kodierer die Parität "seines" Teilsymbols berechnet. Dies geschieht mit wenig Aufwand, da das Teilsymbol nur wenige Bits aufweist.

Bei vier der elf Kodierern kann das Vorzeichen der Disparität des Teilsymbols durch die Invertierung des erzeugten Teilsymbols aktiv gesteuert werden. Dazu weisen die Kodierer (11B13B) die Besonderheit auf, dass deren Symbole für alle Eingangsdaten ein Symbol mit positiver Disparität (+3... +9) erzeugen. Durch Invertierung des Teilsymbols erhält man ein Symbol mit negativer Disparität (-3...-9).

So kann die Disparität (-2,-1,0,1,2) der Teilsymbole der anderen Kodierer (11B12B und 7B8B) kompensiert werden. Der Kodierer 6B8B erzeugt Symbole deren Disparität immer 0 ist. Dann werden alle (Teil) Paritäten der Kodierer (11B12B und 7B8B) addiert und das Ergebnis steuert die Entscheidung, wie viele invertierte und nicht-invertierte Symbole der Kodierer (11B13B) verwendet werden.

Dabei beträgt die mindeste (kleinste) Disparität des Kodierers 11B13B +-3. Also in Summe kann mit diesen vier Kodierern sicher eine Disparität von +-12 (4*+-3) pro Symbol kompensiert werden.

Weiter werden fünf (11B12B) Kodierer und ein (7B8B) Kodierer verwendet deren maximale Disparität +-2 beträgt. Also im Extremfall erzeugen diese sechs Kodierer genau eine Disparität von +-12 (2*+-6). Diese kann sicher durch die 11B13B Kodierer kompensiert werden.

Das Verfahren erreicht gemäß einem Aspekt der vorliegenden Erfindung dieselbe Qualität wie ein 8B10B Code aber mit der Hälfte des Overheads (Verlust durch die Kodierung).

Die Implementierung der Kodier- und Dekodier- Hardware braucht nur minimale Ressourcen (Logik) auf Grund der Verwendung von mehreren kleinen Kodierern anstelle eines Großen.

Die Kodierung kann typischerweise komplett in einem Takt des parallelen Datenpfades erfolgen (kein Pipelining notwendig).

Die Steuerung der Disparität des 128 Bit Symbols kann mit (sehr) wenig Logik realisiert werden, und kann vollständig innerhalb eines Taktes des Datenpfades (langsam) realisiert werden, anstelle einer Berechnung der Disparität durch Zählen der eins und null Bits im seriellen Datenstrom mit dem sehr schnellen seriellen Takt.

Aufgrund der deterministischen Disparität und Lauflänge (Run Length) ist ein weiteres Scrambling nicht notwendig und damit ein schnelles Synchronisieren auf den Datenstrom Empfänger seitig möglich (keine Scramblersynchronisation nötig).

Dies ist unter anderem sehr nützlich für Power-Save-Modi in denen der Link zu Energiesparzwecken abgeschaltet und bei Bedarf wieder eingeschaltet werden kann. Hierfür ist eine schnelle Synchronisation zwischen Sender und Empfänger ein Muss.

Die Erfindung kodiert gemäß einem Aspekt der vorliegenden Erfindung ein 112 Bit breites Datenwort, mit beliebiger Disparität (Disparität max: 112) und beliebiger Lauflänge (Lauflänge max: 112), auf ein 128 Bit breites Symbol. Damit beträgt der durch die Kodierung entstehende Overhead 14.2%.

Die maximal in dem Symbol, wie auch bei beliebiger Sequenzierung beliebiger Symbole auftretende Lauflänge beträgt 8 gleiche Bits.

Die maximale Disparität im langen Mittel ist 0. Die Disparität in einem Symbol ist kleiner 9.

Dabei ist die Komplexität der Logik minimal, vergleichbar mit 10 8B/10B Kodierern (mit dem bekannten Nachteil des großen Overheads).

Erreicht wird dies durch den Einsatz, bzw. die parallele Verwendung von mehreren "kleinen" in ihrer Charakteristik bei Disparität und Lauflänge optimal aufeinander abgestimmten Kodierern.

Die Kodierer 11B12B, 7B8B und 6B8B erzeugen alle Symbole mit einer garantierten maximalen Lauflänge von 6, auch bei beliebiger Sequenzierung der (Teil)Symbole.

Der Kodierer (11B13B) erzeugt gemäß einem Aspekt der vorliegenden Erfindung Symbole mit einer garantierten maximalen Lauflänge von 7 bzw. am Anfang oder Ende des Symbols von 5. Auf Grund der Sequenzierung (Abb2) der (11B13B) mit den anderen Kodierern kann so maximal eine Lauflänge von 8 im Symbol entstehen.

Siehe Eigenschaften der Kodierer wie folgt:
Um die Komplexität der Hardware weiter zu reduzieren, werden vier kleine Kodierer (11B13B) verwendet, deren Disparität sich hinsichtlich Vorzeichen (+-) steuern lässt.

Die Steuerung der Symbol-Disparität erfolgt gemäß einem Aspekt der vorliegenden Erfindung derart, dass jeder Kodierer die Parität "seines" Teilsymbols berechnet. Dies geschieht mit wenig Aufwand, da das Teilsymbol nur wenige Bits aufweist.

Bei vier der elf Kodierern kann das Vorzeichen der Disparität des Teilsymbols durch die Invertierung des erzeugten Teilsymbols aktiv gesteuert werden. Dazu weisen die Kodierer (11B13B) die Besonderheit auf, dass deren Symbole für alle Eingangsdaten ein Symbol mit positiver Disparität (+3... +9) erzeugen. Durch Invertierung des Teilsymbols erhält man ein Symbol mit negativer Disparität (-3...-9).

So kann die Disparität (-2,-1,0,1,2) der Teilsymbole der anderen Kodierer (11B12B und 7B8B) kompensiert werden. Der Kodierer 6B8B erzeugt Symbole deren Disparität immer 0 ist. Dann werden alle (Teil) Paritäten der Kodierer (11B12B und 7B8B) addiert und das Ergebnis steuert die Entscheidung, wie viele invertierte und nicht-invertierte Symbole der Kodierer (11B13B) verwendet werden.

Dabei beträgt die mindeste (kleinste) Disparität des Kodierers 11B13B +-3. Also in Summe kann mit diesen vier Kodierern sicher eine Disparität von +-12 (4*+-3) pro Symbol kompensiert werden.

Weiter werden fünf (11B12B) Kodierer und ein (7B8B) Kodierer verwendet deren maximale Disparität +-2 beträgt. Also im Extremfall erzeugen diese sechs Kodierer genau eine Disparität von +-12 (2*+-6). Diese kann sicher durch die 11B13B Kodierer kompensiert werden.

Das Verfahren erreicht dieselbe Qualität wie ein 8B10B Code aber mit der Hälfte des Overheads (Verlust durch die Kodierung).

Die Implementierung der Kodier- und Dekodier- Hardware braucht nur minimale Ressourcen (Logik) auf Grund der Verwendung von mehreren kleinen Kodierern anstelle eines Großen.

Die Kodierung kann typischerweise komplett in einem Takt des parallelen Datenpfades erfolgen (kein Pipelining notwendig).

Die Steuerung der Disparität des 128 Bit Symbols kann mit (sehr) wenig Logik realisiert werden, und kann vollständig innerhalb eines Taktes des Datenpfades (langsam) realisiert werden, anstelle einer Berechnung der Disparität durch Zählen der eins und null Bits im seriellen Datenstrom mit dem sehr schnellen seriellen Takt.

Aufgrund der deterministischen Disparität und Lauflänge (Run Length) ist ein weiteres Scrambling nicht notwendig und damit ein schnelles Synchronisieren auf den Datenstrom empfängerseitig möglich (keine Scramblersynchronisation nötig).

Dies ist unter anderem sehr nützlich für Power-Save-Modi in denen der Link zu Energiesparzwecken abgeschaltet und bei Bedarf wieder eingeschaltet werden kann. Hierfür ist eine schnelle Synchronisation zwischen Sender und Empfänger ein Muss.

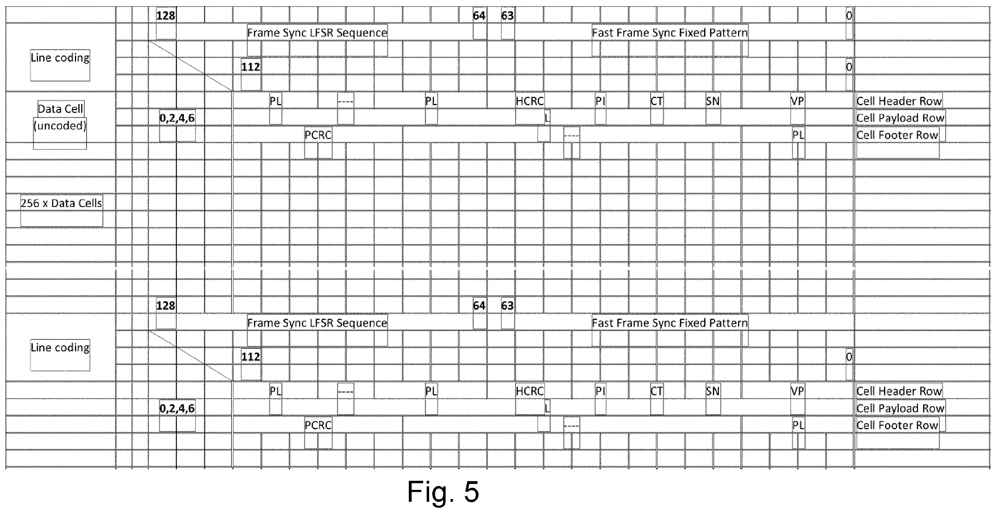

Figur 5 zeigt ein Datenformat, wie es beispielsweise in Figur 2, 3 und/ oder 4 Anwendung finden kann. Wiederum sind die 128 Bit Gesamtsymbol eingezeichnet sowie die beliebige Datenfolge von 112 Bit. Insgesamt können die beliebige Bitfolge und das Gesamtsymbol unterschiedliche Kopfdaten bzw. Rahmendaten aufweisen.

Im Folgenden werden einige konkrete Möglichkeiten geschaffen, wie Segmente der beliebigen Bitfolge in Teilsymbole übersetzt werden können, damit die Disparität minimiert bzw. eliminiert wird. Gezeigt wird in einer ersten Tabelle ein Überführen von 6 Bit nach 8 Bit, in einer zweiten Tabelle ein Überführen von 7 Bit nach 8 Bit, in einer dritten Tabelle ein Überführen von 11 Bit nach 12 Bit und in einer vierten Tabelle ein Überführen von 11 Bit nach 13 Bit. Es werden also Segmente von 6,7 oder 11 Bit in Teilsymbole von 8,12 oder 13 Bit überführt. Die gezeigten Kodierungen sind beispielhaft und verdeutlichen den technischen Effekt, der vorliegend erreicht wird. Die vorliegende Erfindung wurde empirisch evaluiert und erreicht anhand der vorgeschlagenen Kodierung, dass 112 Bit bezüglich ihrer Disparität derart optimiert werden können, dass lediglich 128 Bit erforderlich sind. Dies entspricht einem sogenannten Overhead von lediglich 14 %.

Vorliegend werden Zellen als Synonym für Rahmen beziehungsweise frames verwendet. Es kann sich hierbei auch um Pakete handeln.

### Zellformat/ Rahmenformat

Die Zelle besteht gemäß einem Aspekt der vorliegenden Erfindung aus einem Header mit fester Bitlänge, einem Payload-Bereich mit 4 wählbaren Bitlängen und einem Footer wiederum mit fester Bitlänge.

Die Zellstruktur ist eine Folge von Bits wie folgt:
- Eine virtuelle 7-Bit-Pfadkennung (VP), die eine eindeutige Adresse des virtuellen Pfads darstellt.
- Eine 3-Bit-Sequenznummer (SN), die die Zellen fortlaufend in ihrer Reihenfolge nummeriert.
- Eine 2 Bit breite Cell Type (CT)-Kennung, die die Länge der Nutzdaten angibt.
- Eine 3 Bit breite Payload Information (PI), die zusätzliche Informationen über die Nutzlast enthält. Dies kann auch zur Synchronisation von Nutzdaten und Rahmendaten oder Steuerdaten verwendet werden.
- Ein 10 Bit breites CRC-Polynom (HCRC) zum Fehlerschutz der Header-Informationen. Das Polynom hat bis zu einer Bitfolge von 21 Bit (P=0x2B9) eine Hamming-Distanz von 5.
- Der Payload (PL)-Bereich hat eine Länge von: 187, 411, 635 oder 859 Bit, abhängig vom CT-Wert. Die kürzeste Nutzlast wird so gewählt, dass sie immer noch größer ist als die größte unterstützte (Video-)Streaming-Busbreite. (Sollte die Abbildung von Stromdaten auf die Zellennutzlast vereinfachen).
- Abschließend ein 12 Bit breites CRC-Polynom (PCRC) zum Fehlerschutz der Nutzdaten. Das Polynom hat bis zu einer Bitfolge von 2035 Bit (P=0x8F3) eine Hamming-Distanz von 4.

### Format der Übertragungsrahmen

Der Übertragungsrahmen besteht gemäß einem Aspekt der vorliegenden Erfindung aus einer Folge von M-Bit breiten Wörtern. Der Rahmen beginnt mit einem M-Bit breiten "Komma"-Wort aus einer definierten Folge von Kommawörtern für die Rahmenausrichtung. Dann folgt K Zellen. Die Zellen bestehen aus 2, 4, 6 oder 8 N-Bit breiten Wörtern, die Header, Payload und Footer tragen. Diese N-Bit breiten Wörter werden zu M-Bit breiten Symbolen codiert (Zeilenkodierung).

Dieses Format wird gewählt, um die Verarbeitung von Zellendaten bei angemessenen Zeitfrequenzen zu ermöglichen, vorausgesetzt, dass der Serialisierer/ Deserialisierer immer einen Block von M Bits verarbeitet.

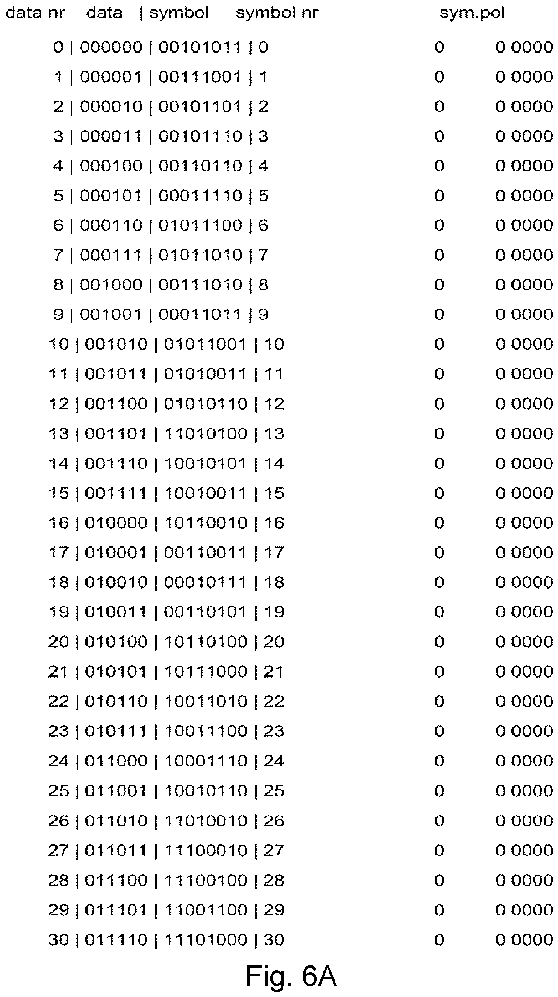

Figur 6A zeigt einen Ausschnitt einer beispielhaften Kodierung von Datensegmente auf Symbole, wobei 6 Bit auf 8 Bit derart kodiert werden, dass die Disparität gemäß einem Aspekt der vorliegenden Erfindung optimiert ist. Beispielsweise wird ein Segment 000000 auf ein Teilsymbol 00101011 kodiert, also ein 6B8B Kodierer.

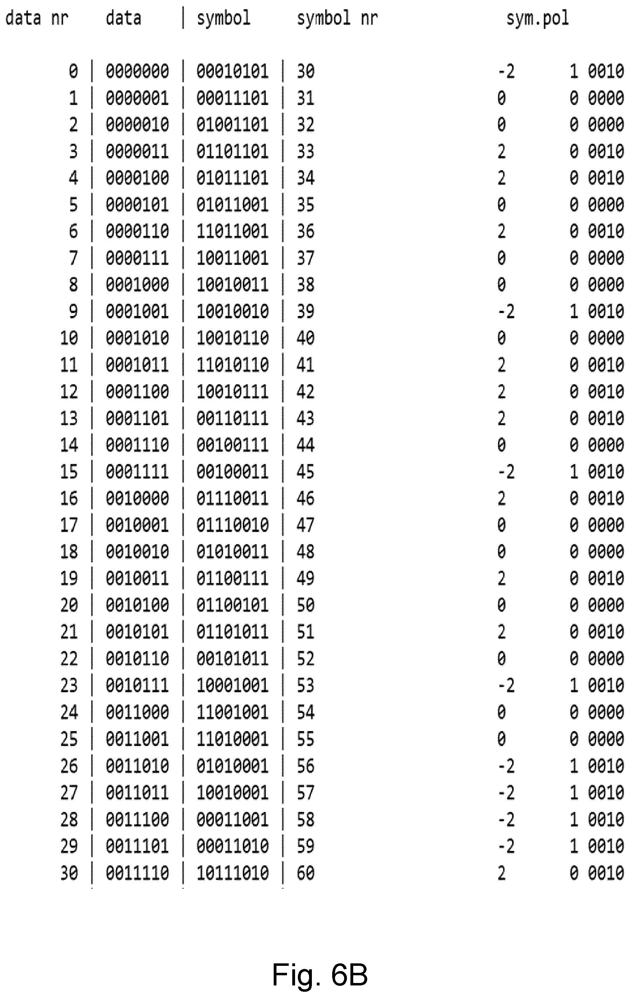

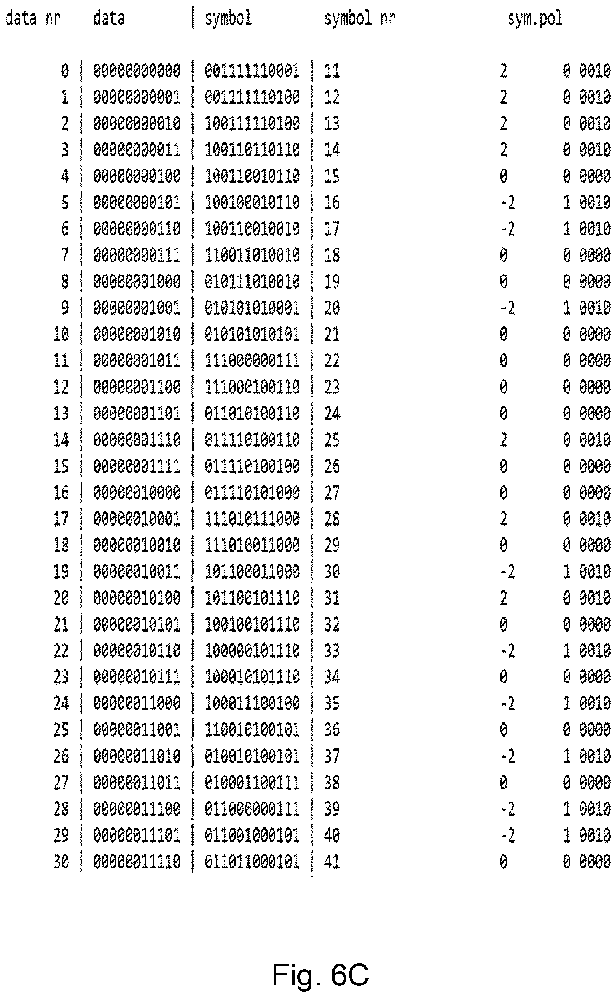

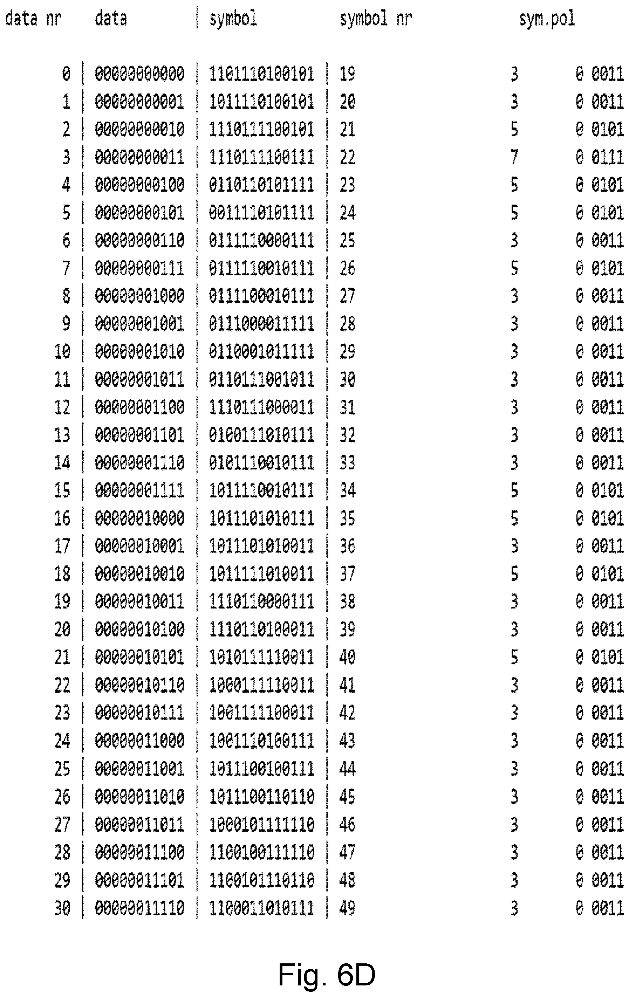

Weiterhin zeigt Figur 6B einen 7B8B Kodierer, Figur 6C einen 11B12B Kodierer und Figur 6D einen 11B13B Kodierer.

## Patentansprüche

1. Verfahren in einem Automobil zum Erzeugen einer effizient übertragbaren Bitfolge mit einer eingeschränkten Disparität und einer eingeschränkten Lauflänge, aufweisend:
- ein Bereitstellen (100) einer beliebigen Bitfolge;
- ein Segmentieren (101) der bereitgestellten Bitfolge in eine vorab definierte Folge von Segmenten gemäß einer jeweils vorab definierten Bitlänge;
- ein Kodieren (102) jedes Segments in jeweils ein Teilsymbol, unter Verwendung jeweils einer Kodiereinheit je Segment aus einer Mehrzahl von Kodiereinheiten, wobei eine erste Teilmenge von Kodiereinheiten ein Vorzeichen der Disparität des Teilsymbols durch Invertieren der Disparität des erzeugten Teilsymbols zum Ausgleich einer Disparität einer zweiten Teilmenge von Kodiereinheiten in Abhängigkeit von bereits übertragener Gesamtsymbole aktiv steuert, derart, dass die Disparität aller Gesamtsymbole minimiert wird, wobei eine Aneinanderreihung der Teilsymbole die effizient übertragbare Bitfolge ergibt.

2. Verfahren nach Anspruch 1, **dadurch gekennzeichnet, dass** die beliebige Bitfolge in ihrer Disparität und Lauflänge uneingeschränkt ist.

3. Verfahren nach Anspruch 1 oder 2, **dadurch gekennzeichnet, dass** die Disparität der zweiten Teilmenge von Kodiereinheiten nicht steuerbar ist.

4. Verfahren nach einem der vorhergehenden Ansprüche, **dadurch gekennzeichnet, dass** das aktive Steuern des Vorzeichens jeweils mittels bedingten bitweisen Invertierens des Symbols erfolgt.

5. Verfahren nach einem der vorhergehenden Ansprüche, **dadurch gekennzeichnet, dass** ein bedingtes Invertieren in Abhängigkeit der Disparität eines Gesamtsymbols, welches aus allen Teilsymbolen gebildet wird, erfolgt.

6. Verfahren nach Anspruch 5, **dadurch gekennzeichnet, dass** die Abhängigkeit derart beeinflusst wird, dass ein Betragswert der Disparität minimiert wird.

7. Verfahren nach Anspruch 6, **dadurch gekennzeichnet, dass** der Betragswert derart minimiert wird, dass bei positiver Gesamtsymbol- Disparität durch eine negative Parität der Teilsymbole entgegengesteuert wird.

8. Verfahren nach einem der Ansprüche 6 oder 7, **dadurch gekennzeichnet, dass** der Betragswert derart minimiert wird, dass bei negativer Gesamtsymbol- Disparität durch eine positive Parität der Teilsymbole entgegengesteuert wird.

9. Verfahren nach einem der vorhergehenden Ansprüche, **dadurch gekennzeichnet, dass** Kodiereinheiten der ersten Teilmenge Segmente von 11 Bit auf Teilsymbole von 13 Bit kodieren.

10. Verfahren nach einem der vorhergehenden Ansprüche, **dadurch gekennzeichnet, dass** Kodiereinheiten der ersten Teilmenge eine Disparität zwischen +3 und +9 aufweisen, welche durch bitweises Invertieren des Teilsymbols gezielt auf -3 bis -9 invertiert werden.

11. Verfahren nach einem der vorhergehenden Ansprüche, **dadurch gekennzeichnet, dass** eine Lauflänge in Teilsymbolen maximal 7 beträgt.

12. Verfahren nach einem der vorhergehenden Ansprüche, **dadurch gekennzeichnet, dass** eine Lauflänge des Teilsymbols bei Kodiereinheiten der ersten Teilmenge ausgehend vom höchstwertigsten und/ oder vom niederwertigsten Bit maximal 5 beträgt.

13. Verfahren nach einem der vorhergehenden Ansprüche, **dadurch gekennzeichnet, dass** bei Kodiereinheiten der zweiten Teilmenge 11 Bit- Segmente auf 12 Bit-Teilsymbole oder 7 Bit- Segmente auf 8 Bit- Teilsymbole oder 6 Bit- Segmente auf 8 Bit- Teilsymbole kodiert werden.

14. Verfahren nach einem der vorhergehenden Ansprüche, **dadurch gekennzeichnet, dass** bei Kodiereinheiten der zweiten Teilmenge eine Disparität zwischen -2 und +2 erzeugt wird.

15. Verfahren nach einem der vorhergehenden Ansprüche, **dadurch gekennzeichnet, dass** bei Kodiereinheiten der zweiten Teilmenge eine Lauflänge im erzeugten Teilsymbol 6 ist.

16. Verfahren nach einem der vorhergehenden Ansprüche, **dadurch gekennzeichnet, dass** Kodiereinheiten der zweiten Teilmenge Teilsymbole erzeugen, welche am Rand eine Lauflänge von maximal 3 aufweisen.

17. Verfahren nach einem der vorhergehenden Ansprüche, **dadurch gekennzeichnet, dass** die Kodiereinheiten parallel angesprochen werden und jeweils ein Segment in ein Teilsymbol kodieren.

18. Verfahren nach einem der vorhergehenden Ansprüche, **dadurch gekennzeichnet, dass** die Kodiereinheiten in der Reihenfolge 21212221212 angesprochen werden, wobei eine 1 für eine Kodiereinheit der ersten Teilmenge steht und eine 2 für eine Kodiereinheit der zweiten Teilmenge.

19. Verfahren nach einem der vorhergehenden Ansprüche, **dadurch gekennzeichnet, dass** ein Multiplexer bei einem Anliegen eines bezüglich der Disparität positiven Datenstroms und eines negativen Datenstroms denjenigen Datenstrom auswählt, der zur Minimierung der Gesamtdisparität des Gesamtsymbols beiträgt.

20. Systemanordnung in einem Automobil zur Erzeugung einer effizient übertragbaren Bitfolge mit einer eingeschränkten Disparität und einer eingeschränkten Lauflänge, aufweisend:
- eine Schnittstelleneinheit eingerichtet zum Bereitstellen (100) einer beliebigen Bitfolge;
- eine Segmentierungseinheit eingerichtet zum Segmentieren (101) der bereitgestellten Bitfolge in eine vorab definierte Folge von Segmenten gemäß einer jeweils vorab definierten Bitlänge;
- eine Kodieranordnung eingerichtet zum Kodieren (102) jedes Segments in jeweils ein Teilsymbol, unter Verwendung jeweils einer Kodiereinheit je Segment aus einer Mehrzahl von Kodiereinheiten, wobei eine erste Teilmenge von Kodiereinheiten ein Vorzeichen der Disparität des Teilsymbols durch Invertieren der Disparität des erzeugten Teilsymbols zum Ausgleich einer Disparität einer zweiten Teilmenge von Kodiereinheiten in Abhängigkeit von bereits übertragener Gesamtsymbole aktiv steuert, derart, dass die Disparität aller Gesamtsymbole minimiert wird, wobei eine Aneinanderreihung der Teilsymbole die effizient übertragbare Bitfolge ergibt.

21. Computerprogrammprodukt, umfassend Befehle, die bei der Ausführung des Programms durch mindestens einen Computer diesen veranlassen, die Schritte des Verfahrens nach einem der Ansprüche 1 bis 19 auszuführen.

22. Computerlesbares Speichermedium, umfassend Befehle, die bei der Ausführung durch mindestens einen Computer diesen veranlassen, die Schritte des Verfahrens nach einem der Ansprüche 1 bis 19 auszuführen.

## Claims

1. A method in a motor vehicle for generating an efficiently transmissible bit sequence having a limited disparity and a limited run length, comprising:
- providing (100) an arbitrary bit sequence;
- segmenting (101) the provided bit sequence into a predefined sequence of segments according to a respective predefined bit length;
- encoding (102) each segment into a respective sub-symbol, using one coding unit per segment from a plurality of coding units, wherein a first subset of coding units actively controls a sign of the disparity of the sub-symbol by inverting the disparity of the generated sub-symbol to compensate for a disparity of a second subset of coding units depending on total symbols already transmitted, such that the parity of all total symbols is minimised, wherein a concatenation of the sub-symbols yields the efficiently transmittable bit sequence.

2. The method according to claim 1, **characterised in that** the arbitrary bit sequence is unrestricted in terms of its parity and run length.

3. The method according to claim 1 or 2, **characterised in that** the parity of the second subset of coding units is not controllable.

4. The method according to one of the preceding claims, **characterised in that** the active control of the sign is effected in each case by means of conditional bitwise inversion of the symbol.

5. The method according to one of the preceding claims, **characterised in that** conditional inversion is performed as a function of the parity of a composite symbol formed from all the sub-symbols.

6. The method according to claim 5, **characterised in that** the dependence is influenced in such a way that an absolute value of the disparity is minimised.

7. The method according to claim 6, **characterised in that** the absolute value is minimised such that, in the case of positive total symbol disparity, this is counteracted by a negative parity of the sub-symbols.

8. The method according to one of claims 6 or 7, **characterised in that** the absolute value is minimised such that, in the event of negative overall symbol disparity, this is counteracted by positive parity of the sub-symbols.

9. The method according to one of the preceding claims, **characterised in that** encoding units of the first subset encode 11-bit segments into 13-bit sub-symbols.

10. The method according to one of the preceding claims, **characterised in that** encoding units of the first subset have a parity between +3 and +9, which is specifically inverted to between -3 and -9 by bitwise inversion of the sub-symbol.

11. The method according to any of the preceding claims, **characterised in that** a run length in sub-symbols is at most 7.

12. The method according to one of the preceding claims, **characterised in that** a run length of the sub-symbol for coding units of the first subset, starting from the most significant bit and/or the least significant bit, is at most 5.

13. The method according to one of the preceding claims, **characterised in that**, for coding units of the second subset, 11-bit segments are encoded into 12-bit sub-symbols, or 7-bit segments into 8-bit sub-symbols, or 6-bit segments into 8-bit sub-symbols.

14. The method according to one of the preceding claims, **characterised in that**, for coding units of the second subset, a parity of between -2 and +2 is generated.

15. The method according to one of the preceding claims, **characterised in that**, for coding units of the second subset, a run length in the generated sub-symbol is 6.

16. The method according to one of the preceding claims, **characterised in that** encoding units of the second subset generate sub-symbols which have a run length of at most 3 at the edge.

17. The method according to one of the preceding claims, **characterised in that** the encoding units are addressed in parallel and each encode a segment into a sub-symbol.

18. The method according to one of the preceding claims, **characterised in that** the encoding units are addressed in the sequence 21212221212, wherein a 1 denotes an encoding unit of the first subset and a 2 denotes an encoding unit of the second subset.

19. The method according to any of the preceding claims, **characterised in that**, upon the arrival of a data stream that is positive in terms of disparity and a data stream that is negative in terms of disparity, a multiplexer selects the data stream that contributes to minimising the total disparity of the overall symbol.

20. A system arrangement in a motor vehicle for generating an efficiently transmissible bit sequence with a limited disparity and a limited run length, comprising:
- an interface unit configured to provide (100) an arbitrary bit sequence;
- a segmentation unit configured to segment (101) the provided bit sequence into a predefined sequence of segments in accordance with a respective predefined bit length;
- a coding arrangement configured to encode (102) each segment into a respective sub-symbol, using one encoding unit per segment from a plurality of encoding units, wherein a first subset of encoding units actively controls a sign of the parity of the sub-symbol by inverting the parity of the generated sub-symbol to compensate for a parity of a second subset of encoding units depending on total symbols already transmitted, such that the disparity of all total symbols is minimised, wherein a concatenation of the sub-symbols yields the efficiently transmittable bit sequence.

21. A computer program product comprising instructions which, when the program is executed by at least one computer, cause the computer to perform the steps of the method according to any one of claims 1 to 19.

22. A computer-readable storage medium comprising instructions which, when executed by at least one computer, cause the computer to perform the steps of the method according to any one of claims 1 to 19.

## Revendications

1. Procédé dans un véhicule automobile pour générer une séquence de bits pouvant être transmise efficacement, présentant une disparité limitée et une longueur de série limitée, comprenant :
- la fourniture (100) d'une séquence de bits quelconque ;
- la segmentation (101) de la séquence de bits fournie en une séquence prédéfinie de segments selon une longueur de bits prédéfinie pour chacun d'entre eux ;
- le codage (102) de chaque segment en un symbole partiel, en utilisant respectivement une unité de codage par segment parmi une pluralité d'unités de codage, un premier sous-ensemble d'unités de codage contrôlant activement un signe de la disparité du sous-symbole en inversant la disparité du sous-symbole généré afin de compenser une disparité d'un deuxième sous-ensemble d'unités de codage en fonction de symboles globaux déjà transmis, de telle sorte que la disparité de l'ensemble des symboles soit minimisée, une succession des symboles partiels donnant la séquence de bits pouvant être transmise efficacement.

2. Procédé selon la revendication 1, **caractérisé en ce que** la séquence de bits quelconque est sans restriction quant à sa disparité et sa longueur de course.

3. Procédé selon la revendication 1 ou 2, **caractérisé en ce que** la disparité du deuxième sous-ensemble d'unités de codage n'est pas contrôlable.

4. Procédé selon l'une des revendications précédentes, **caractérisé en ce que** le contrôle actif du signe s'effectue à chaque fois au moyen d'une inversion conditionnelle bit par bit du symbole.

5. Procédé selon l'une des revendications précédentes, **caractérisé en ce qu'**une inversion conditionnelle s'effectue en fonction de la disparité d'un symbole global, qui est formé à partir de tous les symboles partiels.

6. Procédé selon la revendication 5, **caractérisé en ce que** la dépendance est influencée de telle sorte qu'une valeur absolue de la disparité est minimisée.

7. Procédé selon la revendication 6, **caractérisé en ce que** la valeur absolue est minimisée de telle sorte que, en cas de disparité globale positive des symboles, une parité négative des symboles partiels vienne la contrebalancer.

8. Procédé selon l'une des revendications 6 ou 7, **caractérisé en ce que** la valeur absolue est minimisée de telle sorte qu'en cas de disparité globale des symboles négative, une parité positive des symboles partiels soit appliquée pour la contrebalancer.

9. Procédé selon l'une des revendications précédentes, **caractérisé en ce que** les unités de codage du premier sous-ensemble codent des segments de 11 bits en symboles partiels de 13 bits.

10. Procédé selon l'une des revendications précédentes, **caractérisé en ce que** les unités de codage du premier sous-ensemble présentent une disparité comprise entre +3 et +9, qui est inversée de manière ciblée à une valeur comprise entre -3 et - 9 par inversion bit par bit du sous-symbole.

11. Procédé selon l'une des revendications précédentes, **caractérisé en ce que** la longueur de séquence en symboles partiels est au maximum de 7.

12. Procédé selon l'une des revendications précédentes, **caractérisé en ce que** la longueur de série du symbole partiel, pour les unités de codage du premier sous-ensemble, est au maximum de 5 à partir du bit de poids fort et/ou du bit de poids faible.

13. Procédé selon l'une des revendications précédentes, **caractérisé en ce que**, pour les unités de codage du deuxième sous-ensemble, des segments de 11 bits sont codés en symboles partiels de 12 bits, ou des segments de 7 bits sont codés en symboles partiels de 8 bits, ou des segments de 6 bits sont codés en symboles partiels de 8 bits.

14. Procédé selon l'une des revendications précédentes, **caractérisé en ce que**, pour les unités de codage du deuxième sous-ensemble, une disparité comprise entre -2 et +2 est générée.

15. Procédé selon l'une des revendications précédentes, **caractérisé en ce que**, pour les unités de codage du deuxième sous-ensemble, la longueur de course dans le sous-symbole généré est égale à 6.

16. Procédé selon l'une des revendications précédentes, **caractérisé en ce que** les unités de codage du deuxième sous-ensemble génèrent des symboles partiels qui présentent une longueur de série maximale de 3 à la limite.

17. Procédé selon l'une des revendications précédentes, **caractérisé en ce que** les unités de codage sont adressées en parallèle et codent chacune un segment dans un symbole partiel.

18. Procédé selon l'une des revendications précédentes, **caractérisé en ce que** les unités de codage sont activées dans l'ordre 21212221212, un 1 représentant une unité de codage du premier sous-ensemble et un 2 représentant une unité de codage du deuxième sous-ensemble.

19. Procédé selon l'une des revendications précédentes, **caractérisé en ce que**, lorsqu'un flux de données positif en termes de disparité et un flux de données négatif sont présents, un multiplexeur sélectionne le flux de données qui contribue à minimiser la disparité globale du symbole global.

20. Dispositif dans un véhicule automobile destiné à générer une séquence de bits pouvant être transmise efficacement, présentant une disparité limitée et une longueur de course limitée, comprenant :
- une unité d'interface agencée pour fournir (100) une séquence de bits quelconque ;
- une unité de segmentation agencée pour segmenter (101) la séquence de bits fournie en une séquence prédéfinie de segments selon une longueur de bits respectivement prédéfinie ;
- un dispositif de codage agencé pour coder (102) chaque segment en un symbole partiel respectif, en utilisant respectivement une unité de codage par segment parmi une pluralité d'unités de codage, un premier sous-ensemble d'unités de codage contrôlant activement un signe de la disparité du sous-symbole en inversant la disparité du sous-symbole généré afin de compenser une disparité d'un deuxième sous-ensemble d'unités de codage en fonction des symboles globaux déjà transmis, de telle sorte que la disparité de l'ensemble des symboles soit minimisée, une succession des symboles partiels donnant la séquence de bits pouvant être transmise efficacement.

21. Produit logiciel comprenant des instructions qui, lors de l'exécution du programme par au moins un ordinateur, amènent celui-ci à exécuter les étapes du procédé selon l'une des revendications 1 à 19.

22. Support de stockage lisible par ordinateur, comprenant des instructions qui, lors de leur exécution par au moins un ordinateur, amènent celui-ci à exécuter les étapes du procédé selon l'une des revendications 1 à 19.
